(19) Europäisches Patentamt
European Patent Office
Office européen des brevets

(11) **EP 4 382 313 B1**

(12) **EUROPEAN PATENT SPECIFICATION**

(45) Date of publication and mention of the grant of the patent:
**02.07.2025 Bulletin 2025/27**

(21) Application number: **23209008.4**

(22) Date of filing: **10.11.2023**

(51) International Patent Classification (IPC):
***B60C 1/00*** $^{(2006.01)}$ ***B60C 11/00*** $^{(2006.01)}$
***B60C 11/03*** $^{(2006.01)}$

(52) Cooperative Patent Classification (CPC):
**B60C 1/0016; B60C 11/0008;** B60C 11/0311; B60C 11/033; B60C 2011/0016; B60C 2011/0025; B60C 2011/0341; B60C 2011/0344

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.12.2022 JP 2022197274**

(43) Date of publication of application:
**12.06.2024 Bulletin 2024/24**

(73) Proprietor: **Sumitomo Rubber Industries, Ltd.**
**Kobe-shi, Hyogo 651-0072 (JP)**

(72) Inventor: **MAEKAWA, Tetsuya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 4 067 114**
**WO-A1-2021/235400**
**WO-A1-2022/224538**
**JP-A- 2021 172 212**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 382 313 B1

**Description**

TECHNICAL FIELD

The present invention relates to a tire.

BACKGROUND OF THE INVENTION

For tires mounted to automobiles, it is important to maintain a gripping force between a tread and a road surface during all of driving, braking, and turning of an automobile. Conventionally, various methods for improving grip performance have been studied. For example, JP 2008-285524 A describes a pneumatic tire comprising a tread rubber whose grip performance is improved by using a nano-particle zinc oxide.
Tires having a ratio (G/WL) of the tire weight G (kg) to the maximum load capability WL (kg) of the tire of 0.0160 or less are described in WO 2022/224538 A1. Further tires having a ratio of G/WL of 0.0150 or less are disclosed in JP 2021 172212 A and in EP 4 067 114 A1.

SUMMARY OF THE INVENTION

It is an object of the present invention to provide a tire having improved grip performance.
That is, the present invention relates to the following tire:

A tire comprising a tread,
wherein the tread is composed of a rubber composition comprising a rubber component,
wherein a ratio (G/WL) of a tire weight G, in kg, to a maximum load capacity WL, in kg, of the tire is 0.0150 or less,
wherein, when an average value of values of static friction coefficients of the rubber composition measured five times at a grounding pressure of 0.30 MPa and at a measurement temperature of 25°C on a road surface according to ISO15222 is referred to as $\mu$, G/WL and $\mu$ satisfy the following inequality (1),

$$(G/WL)/\mu \leq 0.0214 \qquad (1).$$

According to the present invention, a tire with improved grip performance can be provided. Besides, in the present specification, "grip performance" means dry grip performance except a case where it is clear that the tire is under wet environment.

BRIEF DESCRIPTION OF THE DRAWINGS

FIG. 1 is a view showing a tire cross-sectional width Wt, a tire cross-sectional height Ht, and a tire outer diameter Dt on a cross section of a tire.
FIG. 2 is a view schematically showing a tread grounding surface in a tire according to one embodiment of the present invention. The surrounded area in FIG. 2 is the tread grounding surface.
FIG. 3 is a view showing a tread pattern of a tire according to one embodiment of the present invention.

DETAILED DESCRIPTION

A tire that is one embodiment of the present invention is a tire comprising a tread, wherein the tread is composed of a rubber composition comprising a rubber component, wherein a ratio (G/WL) of a tire weight G, in kg, to a maximum load capacity WL, in kg, of the tire is 0.0150 or less, wherein, when an average value of static friction coefficients of the rubber composition measured five times at a grounding pressure of 0.30 MPa and at a measurement temperature of 25°C on a road surface according to ISO15222 is referred to as $\mu$, G/WL and $\mu$ satisfy the following inequality (1):

$$(G/WL)/\mu \leq 0.0214 \qquad (1).$$

A mechanism by which grip performance can be improved in the present invention is considered as follows, although the following consideration is not intended to be bound by any theory. That is, (1) a tire having a small G/WL refers to a tire having a low tire weight relative to a maximum load capacity, and in a case of use of such a tire, a vehicle weight,

particularly a weight under a spring is reduced, so that a ratio of a grip force to the vehicle weight is improved, and a relative improvement in the grip force as a vehicle can be expected. Furthermore, (2) when a ratio of G/WL to a static friction coefficient ($\mu$) is equal to or less than a predetermined value, the both of G/WL and $\mu$ are controlled with each other so that G/WL does not become too large and the static friction coefficient does not become too small, whereby an improvement in the grip force can also be expected. Then, with cooperation of these, it is considered that an improvement in grip performance is achieved in the present invention.

A value of G/WL is preferably 0.0140 or less.

It is considered that such a value contributes to an improvement in grip performance of a tire.

A value of $\mu$ is preferably 0.65 or more.

It is considered that such a value contributes to an improvement in grip performance of a tire.

A value on the right side of the inequality (1) is preferably 0.0202.

The both of G/WL and $\mu$ are controlled with each other so that G/WL does not become too large and the static friction coefficient does not become too small, so that it is considered that such a configuration contributes to an improvement in grip performance.

The rubber component preferably comprises an isoprene-based rubber.

When the rubber component comprises an isoprene-based rubber, adhesiveness of a rubber surface is increased, and thus it is considered that such a configuration contributes to an improvement in static friction coefficient.

The rubber composition preferably comprises a resin component.

It is considered that such a configuration contributes to an improvement in static friction coefficient.

A loss tangent (30°C tan $\delta$) of the rubber composition measured under a condition of a temperature at 30°C, an initial strain of 5%, a dynamic strain of 1%, and a frequency of 10 Hz is preferably greater than 0.17.

When the tan $\delta$ in a range of normal temperatures is equal to or greater than a predetermined value, it is considered that such a tan $\delta$ contributes to an improvement in grip performance in such a temperature range.

A complex elastic modulus (30°CE$_*$), in MPa, of the rubber composition measured under a condition of a temperature at 30°C, an initial strain of 5%, a dynamic strain of 1%, and a frequency of 10 Hz is preferably less than 9.5.

When the E$_*$ in a range of normal temperatures is less than a predetermined value, followability to irregularities on a road surface is improved, energy loss is increased with an increase of an amount of deformation of a rubber, and thus it is considered that such a E$_*$ contributes to an improvement in grip performance.

A product of a loss tangent (30°C tan $\delta$) of the rubber composition measured under a condition of a temperature at 30°C, an initial strain of 5%, a dynamic strain of 1%, and a frequency of 10 Hz and a loss tangent (0°C tan $\delta$) of the rubber composition measured under a condition of a temperature at 0°C, an initial strain of 10%, a dynamic strain of 2.5%, and a frequency of 10 Hz is preferably greater than 0.11.

When the tan $\delta$ in a range from low temperatures to normal temperatures is equal to or greater than a predetermined value, it is considered that such a configuration contributes to an improvement in grip performance in such a temperature range.

It is preferable that the rubber composition comprises a resin component and a content of the resin component based on 100 parts by mass of the rubber component is greater than 10 parts by mass.

It is considered that such a configuration contributes to an improvement in static friction coefficient.

It is preferable that the rubber composition comprises a resin component and the resin com ponent comprises at least one selected from the group consisting of a C5-C9-based petroleum resin, a terpene-based resin, and a rosin-based resin.

It is considered that such a configuration contributes to an improvement in static friction coefficient.

It is preferable that the rubber composition comprises a filler, the filler comprises carbon black and silica, and a mass ratio of the silica to the carbon black is greater than 1.0.

When silica whose amount is greater than a predetermined value relative to carbon black is compounded, followability to a road surface is improved, and thus it is considered that such a configuration contributes to an improvement in static friction coefficient.

It is preferable that a tread surface of the tread comprises one or more circumferential grooves extending continuously in a tire circumferential direction and land parts partitioned off by the circumferential grooves, each of the land parts comprises a lateral groove extending in a tire width direction, and the lateral groove comprises a part whose groove width on a cross section perpendicular to a tire radial direction is wider than a groove width on the tread surface.

Even if the tread is abraded, a groove area of the lateral groove widens, whereby drainage performance is improved, and thus it is considered that such a configuration contributes to an improvement in grip performance.

It is preferable that the tread surface of the tread comprises one or more circumferential grooves extending continuously in a tire circumferential direction and land parts partitioned off by the circumferential grooves and a ratio of an area of the circumferential grooves to an area of a tread grounding surface is greater than 19% and less than 32%.

When the groove area of the circumferential grooves is equal to or greater than a predetermined value, drainage performance can be secured, and thus it is considered that such a configuration contributes to an improvement in grip

performance.

It is preferable that the tread surface of the tread comprises three or more circumferential grooves extending continuously in the tire circumferential direction, and land parts partitioned off by the circumferential grooves; the circumferential grooves consist of a pair of outermost circumferential grooves located on outermost sides in the tire width direction, and at least one center circumferential groove located inside in the tire width direction with respect to the pair of outermost circumferential grooves; the land parts are partitioned off into shoulder land parts located outside in the tire width direction with respect to the outermost circumferential grooves and center land parts located inside in the tire width direction with respect to the outermost circumferential grooves; each of the shoulder land parts comprises a shoulder lateral groove extending in the tire width direction; each of the center land parts comprises a center lateral groove extending in the tire width direction; one end of the shoulder lateral groove is open to a tread grounding end and the other end of the shoulder lateral groove is open to an outermost circumferential groove; one end of the center lateral groove is open to an outermost circumferential groove and the other end of the center lateral groove is open to the center circumferential groove; and the shoulder lateral groove and the center lateral groove constitute a series of lateral grooves extending continuously from the tread grounding end toward a tire equatorial plane.

When such a configuration is used, an efficient drainage from a tire central part to the tread grounding end becomes possible, and thus it is considered that such a configuration contributes to an improvement in grip performance.

<Definition>

Unless otherwise noted, a "size or the like of each part of a tire" is defined as a value specified in a standardized state in which the tire is rim-assembled to a standardized rim, filled with air at a standardized internal pressure, and applied with no load.

A "tire weight G (kg)" is a weight of a single tire excluding a weight of a rim. Moreover, in a case where a noise suppressing material, a sealant, a sensor, and the like are attached to a tire lumen, G is a value including weights of these elements.

A "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which the tire is based, defined for each tire by the standard. The standardized internal pressure refers to, for example, the "MAXIMUM AIR PRESSURE" in JATMA, the "maximum value" described in "INFLATION PRESSURE" in ETRTO, or the "maximum value" described in the table "TIRE LOAD LIMITS AT VARIOUS COLD INFLATION PRESSURES" in TRA. Like the "standardized rim", JATMA, ETRTO, and TRA are referred to in this order, and a standardized internal pressure is based on that standard. Additionally, in a case of a tire whose size is not defined in the standard, the standardized internal pressure refers to a standardized internal pressure (provided that the standardized internal pressure is 250 kPa or more) for another tire size for which the standardized rim is described as a standard rim (and which is defined by the standard). Besides, in a case where a plurality of standardized internal pressures of 250 kPa or more are described, the standardized internal pressure refers to the minimum values among them.

A "standardized load" means a load, in a standard system including a standard on which the tire is based, defined for each tire by the standard. The standardized internal pressure refers to, for example, the "MAXIMUN LOAD CAPACITY" in JATMA, "LOAD CAPACITY" in ETRTO or the "maximum value" described in the table "TIRE LOAD LIMITS AT VARIOUS COLD INFLATION PRESSURES" in TRA are standardized loads. Like the "standardized rim" and the "standardized internal pressure", JATMA, ETRTO, and TRA are referred to in this order, and a standardized load is based on that standard.

A "maximum load capacity (WL) in kg" is a value calculated by the following equations (1) and (2) when a tire cross-sectional width measured in the standardized state is referred to as Wt, in mm, a tire cross-sectional height is referred to as Ht, in mm, and a tire outer diameter is referred to as Dt, in mm. V denotes a virtual volume of a space occupied by the tire. In a case where there are patterns, letters, or the like on a tire lateral side, the tire cross-sectional width Wt is a maximum width between sidewall outer surfaces as one from which the patterns, letters, or the like are excluded. The tire cross-sectional height Ht is a distance from a bottom surface of a bead part to an outermost surface of a tread and is one-half of a difference between the outer diameter of the tire and a nominal size of a rim diameter. Besides, FIG. 1 shows the tire cross-sectional width Wt, the tire cross-sectional height Ht, and the tire outer diameter Dt.

$$V = \{(Dt/2)^2 - (Dt/2 - Ht)^2\} \times \pi \times Wt \cdots (1),$$

$$WL = 0.000011 \times V + 100 \cdots (2).$$

A "tread grounding surface" refers to a surface of the tread that touches the ground when a standardized load is applied to a tire that is put perpendicularly on a flat plane in a state where the tire is rim-assembled to a standardized rim and filled with air at a standardized internal pressure. For example, the tread grounding surface is obtained by applying ink to a tread surface and pressing the tire tread surface on cardboard. An area of the tread grounding surface is defined as an average value obtained by rotating the tire in 72 degree increments in a tire circumferential direction and performing transcription at five sites of the tire to obtain a grounding shape five times, followed by averaging them. Besides, FIG. 2 schematically shows a tread grounding surface. The surrounded area in FIG. 2 is the tread grounding surface.

A "tread grounding end" refers to an outermost-side grounding position when a standardized load is applied to a tire that is put perpendicularly on a flat plane in a state where the tire is rim-assembled to a standardized rim and filled with air at a standardized internal pressure.

A "circumferential groove" refers to a groove extending continuously in a tire circumferential direction on a tread surface, a pair of circumferential grooves located on the outermost sides in a tire width direction are referred to as outermost circumferential grooves, and a circumferential groove located inside in the tire width direction with respect to the pair of outermost circumferential grooves is referred to as a center circumferential groove.

A "land part" refers to an area partitioned off by circumferential grooves on a tread surface, a land part located outside in the tire width direction with respect to the outermost circumferential grooves is referred to as a shoulder land part, and a land part located inside in the tire width direction with respect to the outermost circumferential grooves is referred to as a center land part.

A "lateral groove" refers to a groove present on a land part and extending in the tire width direction. Examples of the lateral groove include a lateral groove having a part whose groove width on a cross section perpendicular to a tire radial direction is wider than a groove width on a tread surface (widening lateral groove), a lateral groove present on a shoulder land part (shoulder lateral groove), a lateral groove present on the center land part (center lateral groove), and the like. Besides, in the present specification, examples of the lateral groove include not only a groove whose groove width on the tread surface is 2 mm or more but also a groove whose groove width on the tread surface is less than 2 mm and which is usually referred to as a sipe.

<Measuring method>

A "static friction coefficient μ" refers to a maximum static friction coefficient of a rubber and is an average value of maximum static friction coefficients measured five times using TL501 SLIPMETER (manufactured by Trinity-Lab. Inc.) on a road surface according to ISO15222 under a condition of a grounding pressure of 0.30 MPa and a measurement temperature at 25°C at a speed as a push-down speed which enables movement from $\theta = 0°$ (vertical position) to 60° for 3 seconds. A sample for measurement of static friction coefficient is a vulcanized rubber composition having a length of 27 mm, a width of 25 mm, and a thickness of 8 mm. In a case where the sample is prepared by being cut out from a tire, the sample is cut out from a tread surface of the tire such that a tire circumferential direction becomes a long side and a tire radial direction becomes a thickness.

A "tan δ at 30°C (30°C tan δ)" is a loss tangent measured using a dynamic viscoelasticity measuring apparatus (for example, EPLEXOR series manufactured by gabo Systemtechnik GmbH) under a condition of a temperature at 30°C, an initial strain of 5%, a dynamic strain of 1%, and a frequency of 10 Hz in an extension mode. A sample for measurement of loss tangent is a vulcanized rubber composition having a length of 20 mm, a width of 4 mm, and a thickness of 1 mm. In a case where the sample is prepared by being cut out from a tire, the sample is cut out from an inner part of a tread of the tire such that a tire circumferential direction becomes a long side and a tire radial direction becomes a thickness.

A "complex elastic modulus at 30°C (30°CE*)" is a complex elastic modulus, in MPa, measured using a dynamic viscoelasticity measuring apparatus (for example, EPLEXOR series manufactured by gabo Systemtechnik GmbH) under a condition of a temperature at 30°C, an initial strain of 5%, a dynamic strain of 1%, and a frequency of 10 Hz in an extension mode. A sample for measurement of complex elastic modulus is prepared in the same manner as in the case of 30°C tan δ.

A "tan δ at 0°C (0°C tan δ)" is a loss tangent measured using a dynamic viscoelasticity measuring apparatus (for example, EPLEXOR series manufactured by gabo Systemtechnik GmbH) under a condition of a temperature at 0°C, an initial strain of 10%, a dynamic strain of 2.5%, and a frequency of 10 Hz in an extension mode. A sample for measurement of 0°C tan δ is prepared in the same manner as in the case of 30°C tan δ.

A "styrene content" is calculated by $^1$H-NMR measurement

A "vinyl bond amount (1,2-bond butadiene unit amount)" is calculated according to JIS K 6239-2:2017 by an infrared absorption spectrometry.

A "cis content (cis-1,4-bond butadiene unit amount)" is calculated according to JIS K 6239-2:2017 by an infrared absorption spectrometry.

A "glass transition temperature (Tg)" is measured by making a measurement according to JIS K 7121 using a differential scanning calorimeter (Q200) manufactured by TA Instruments Japan Inc. while raising a temperature at a temperature rising rate of 10°C/min.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

A "$N_2$SA of carbon black" is measured according to JIS K 6217-2:2017.

A "$N_2$SA of silica" is measured by a BET method according to ASTM D3037-93.

An "average primary particle size" can be calculated by making observations with a transmission or scanning electron microscope, measuring 400 or more primary particles observed in the field of view, and averaging them. In a case where shapes of the particles are spherical, a diameter of the sphere is defined as a particle size. In a case where the particles have needle-like or rod-like shapes, a minor radius of each of the particles is defined as a particle size. In a case where the particles have indefinite shapes, an average of the major radius and the minor radius of each of the particles is defined as a particle size. The average primary particle size is applied to carbon black, silica, and the like.

A "softening point" can be defined as a temperature at which a sphere drops when the softening point specified in JIS K 6220-1: 2001 is measured with a ring and ball softening point measuring device.

A "content of a plasticizing agent" also comprises an amount of a plasticizing agent contained in a rubber component extended with the plasticizing agent. Similarly, a "content of oil" also comprises an amount of oil contained in an oil extended rubber. Here, a "plasticizing agent" refers to one comprising a resin component, oil, and the like.

[Tire]

The tire of the present invention will be described appropriately while also referring to the drawings. However, the following descriptions are illustrative for explaining the present invention and are not intended to limit the technical scope of the present invention to this description range only.

(G/WL)

In the tire of the present invention, a ratio (G/WL) of a tire weight G, in kg, to a maximum load capacity WL, in kg, is 0.0150 or less. A value of the G/WL is preferably 0.0145 or less, more preferably 0.0140 or less, further less than 0.0140, further preferably less than 0.0135, further preferably 0.0131 or less. Besides, a lower limit value of the G/WL is, but not particularly limited to, usually about 0.0129.

(Tread)

The tire of the present invention comprises a tread. The tread is composed of a rubber composition comprising a rubber component.

For the rubber composition, a loss tangent (30°C tan $\delta$) measured under a condition of a temperature at 30°C, an initial strain of 5%, a dynamic strain of 1%, and a frequency of 10 Hz is preferably greater than 0.17, more preferably greater than 0.20, further preferably 0.21 or more, further preferably 0.22 or more, further preferably 0.23 or more, further preferably 0.24 or more.

For the rubber composition, a complex elastic modulus (30°CE*), in MPa, measured under a condition of a temperature at 30°C, an initial strain of 5%, a dynamic strain of 1%, and a frequency of 10 Hz is preferably less than 9.5, more preferably less than 9.0, further preferably 8.9 or less, further preferably less than 8.5, further preferably less than 8.4, further preferably 8.3 or less, further preferably 8.2 or less, further preferably 8.1 or less.

For the rubber composition, a product (30°C tan $\delta \times$ 0°C tan $\delta$) of the 30°C tan $\delta$ and a loss tangent (0°C tan $\delta$) of the rubber composition measured under a condition of a temperature at 0°C, an initial strain of 10%, a dynamic strain of 2.5%, and a frequency of 10 Hz is preferably greater than 0.11, more preferably 0.12 or more, further preferably 0.13 or more, further preferably 0.15 or more.

(Inequality (1))

Regarding static friction coefficients of the rubber composition measured five times at a grounding pressure of 0.30 MPa and at a measurement temperature of 25°C on a road surface according to ISO15222, when an average value of static friction coefficients measured at five times is referred to as $\mu$, G/WL and $\mu$ satisfy the following inequality (1),

$$(G/WL)/\mu \leq 0.0214 \quad (1).$$

A value of μ is preferably 0.65 or more, more preferably 0.70 or more, further preferably greater than 0.75, further preferably greater than 0.78. Moreover, a value on the right side of the inequality (1) is preferably 0.0202, more preferably 0.0195, further preferably 0.0190, further preferably 0.0187, further preferably 0.0181. Besides, an upper limit value of μ is, but not particularly limited to, usually about 0.85.

A value of μ can be adjusted by a usual method in the tire industry, specifically, by changing a type or an amount of a chemical compounded in a rubber composition constituting the tread (for example, a rubber component, a filer, a resin component, oil, sulfur, a vulcanization accelerator, a silane coupling agent, and the like). For example, a value of μ can be increased by increasing a content of a resin component exhibiting adhesiveness, and conversely, a value of μ can be decreased by decreasing a content of the resin component.

(Circumferential groove, Land part)

A tread surface of the tread preferably comprises one or more circumferential grooves extending continuously in a tire circumferential direction, and land parts partitioned off by the circumferential grooves.

The circumferential grooves may extend linearly or in a zigzag shape. Moreover, the number of the circumferential grooves may be one or more, but when the number of the circumferential grooves is two or more, the land parts are at least divided into a pair of shoulder land parts and a center land part sandwiched between the pair of shoulder land parts. Furthermore, when the number of the circumferential grooves is three or more, the center land part is further divided into a land part that is to be located on an inner side of a vehicle when a tire is mounted to the vehicle, and a land part that is to be located on an outer side of the vehicle. Accordingly, tread patterns of the respective land parts can vary from one another, and a degree of freedom in design of tread patterns is improved, which is thus preferable. The number of the circumferential grooves may be 4 or more or 5 or more.

A ratio of an area of the circumferential grooves to an area of a tread grounding surface is preferably greater than 19% and less than 32%. The ratio is more preferably 20% or more, further preferably 22% or more. On the other hand, the ratio is more preferably 30% or less, further preferably 28% or less.

In a case where the number of the circumferential grooves is 3 or more, the circumferential grooves consist of a pair of outermost circumferential grooves located on the outermost sides in the tire width direction, and at least one center circumferential groove located inside in the tire width direction with respect to the pair of outermost circumferential grooves. For example, FIG. 3 shows three circumferential grooves: a center circumferential groove 11 and outermost circumferential grooves 12 and 13. In this case, the land parts are partitioned off into shoulder land parts located outside in the tire width direction with respect to the outermost circumferential grooves and center land parts located inside in the tire width direction with respect to the outermost circumferential grooves. For example, FIG. 3 shows center land parts 21 and 22 and shoulder land parts 23 and 24. For groove widths of the center circumferential groove and the outermost circumferential grooves, a groove width of the center circumferential groove is preferably wider than a groove width of the outermost circumferential groove. This is because drainage performance in a tire central part is improved and thus such a configuration can contribute to improvement in grip performance. For example, in FIG. 3, a groove width of the center circumferential groove 11 is formed to be wider than groove widths of the outermost circumferential grooves 12 and 13.

(Lateral groove)

Each of the land parts preferably comprise a latera groove extending in the tire width direction.

A width of the lateral groove is, but not particularly limited to, usually 8 mm or less. Moreover, although there is also a case where a groove whose groove width is less than 2 mm is regarded as a sipe and distinguished from a groove, examples of the lateral groove in the present invention also include a groove whose groove width is less than 2 mm. A direction of the lateral groove may make a predetermined angle to the tire width direction. The angle is, for example, within a range of 0° to ±80°. For one lateral groove, the angle may be constant at any position in the tire width direction or may vary in accordance with displacement of a position in the tire width direction. At least one end of the lateral groove may communicate with a circumferential groove or a tread grounding end, or both ends of the latera groove may or may not communicate with a circumferential groove or a tread grounding end.

The lateral groove preferably comprises a part whose groove width on a cross section perpendicular to a tire radial direction is wider than a groove width on the tread surface (widening part). A form of the widening part is not particularly limited as long as it can improve grip performance by improving drainage performance with abrasion of a tire. For example, FIG. 3 shows widening lateral grooves 31, 32, 33, and 34 that are lateral grooves each comprising a widening part. A groove width of a widening part of such a widening lateral groove becomes a groove width that widens uniformly

from the tread surface to a groove bottom in the tire radial direction, that is, the widest groove width at the groove bottom. Therefore, the tire is configured such that the more the tire is abraded, the higher drainage performance becomes.

It is preferable that each of the shoulder land parts comprises a shoulder lateral groove extending in the tire width direction; and each of the center land parts comprises a center lateral groove extending in the tire width direction. In this case, it is preferable that one end of the shoulder lateral groove is open to a tread grounding end, and the other end of the shoulder lateral groove is open to an outermost circumferential groove; that one end of the center lateral groove is open to an outermost circumferential groove, and the other end of the center lateral groove is open to a center circumferential groove; and that the shoulder lateral groove and the center lateral groove further constitute a series of lateral grooves extending continuously from the tread grounding end toward a tire equatorial plane. For example, FIG. 3 shows the center land parts 21 and 22, center lateral grooves 35 and 36 that the center land parts 21 and 22 comprise, respectively, the shoulder land parts 23 and 24, and shoulder lateral grooves 37 and 38 that the shoulder land parts 23 and 24 comprise, respectively. Moreover, one end of each of the shoulder lateral grooves 37 and 38 is open to a tread grounding end Te, the other ends of the shoulder lateral grooves 37 and 38 are open to outermost circumferential grooves 12 and 13, respectively, one ends of the center lateral grooves 35 and 36 are open to the outermost circumferential grooves 12 and 13, respectively, and the other ends of the center lateral grooves 35 and 36 are open to the center circumferential groove 11. Furthermore, the shoulder lateral grooves 37 and 38 and the center lateral grooves 35 and 36 constitute a series of lateral grooves extending continuously from the tread grounding end toward the tire equatorial plane.

[Rubber composition]

The rubber composition constituting the tread according to the present invention will be described below.

<Rubber component>

A rubber component included in the rubber composition preferably comprises an isoprene-based rubber and more preferably comprises an isoprene-based rubber, a styrene-butadiene rubber (SBR), and a butadiene rubber (BR). Moreover, the rubber component may consist of an isoprene-based rubber, a SBR, and a BR.

(Isoprene-based rubber)

Examples of the isoprene-based rubber include a natural rubber (NR), an isoprene rubber (IR), a reformed NR, a modified NR, a modified IR, and the like. As the NR, for example, those common in the tire industry can be used, such as SIR20, RSS#3, TSR20, and the like. The IR is not particularly limited, and those common in the tire industry can be used, such as, for example, IR2200 and the like. Examples of the reformed NR can include a deproteinized natural rubber (DPNR), an ultra pure natural rubber, and the like, examples of the modified NR can include an epoxidized natural rubber (ENR), a hydrogenated natural rubber (HNR), a grafted natural rubber, and the like, and examples of the modified IR can include an epoxidized isoprene rubber, a hydrogenated isoprene rubber, a grafted isoprene rubber, and the like. The isoprene-based rubbers may be used alone, or two or more thereof may be used in combination.

A content of the isoprene-based rubber when compounded in 100% by mass of the rubber component is preferably greater than 20% by mass, more preferably greater than 25% by mass, further preferably greater than 30% by mass, particularly preferably greater than 35% by mass, from the viewpoints of processability and durability. On the other hand, an upper limit of the content of the isoprene-based rubber in the rubber component is, but not particularly limited to, preferably less than 85% by mass, more preferably less than 80% by mass, further preferably less than 75% by mass, particularly preferably less than 70% by mass.

(SBR)

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. Among them, a S-SBR is preferable, and a modified S-SBR is more preferable. These SBRs may be used alone, or two or more thereof may be used in combination.

Examples of the modified SBR include a modified SBR into which a functional group usually used in this field is introduced. Examples of the above-described functional group include, for example, an amino group (preferably an amino group whose hydrogen atom is substituted with an alkyl group having 1 to 6 carbon atoms), an amide group, a silyl group, an alkoxysilyl group (preferably an alkoxysilyl group having 1 to 6 carbon atoms), an isocyanate group, an imino group, an

imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, etc. Besides, these functional groups may each have a substituent. Examples of the substituent include functional groups such as, for example, an amino group, an amide group, an alkoxysilyl group, a carboxyl group, a hydroxyl group, and the like. Moreover, examples of the modified SBR can include hydrogenated ones, epoxidized ones, tin-modified ones, etc.

An oil-extended SBR or a non-oil extended SBR can be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

As the SBR, for example, SBRs manufactured and sold by Sumitomo Chemical Co., JSR Corporation, Ltd., Asahi Kasei Corporation, Zeon Corporation, ZS Elastomer Co., Ltd., etc. can be used.

A styrene content of the SBR is preferably greater than 15% by mass, more preferably greater than 20% by mass, further preferably greater than 25% by mass, from the viewpoints of securing damping property at the tread part and wet grip performance. Moreover, it is preferably less than 60% by mass, more preferably less than 50% by mass, further preferably less than 40% by mass, from the viewpoints of temperature dependency of grip performance and abrasion resistance. Besides, the styrene content of the SBR is measured by the above-described method.

A vinyl bond amount of the SBR is preferably greater than 10 mol%, more preferably greater than 20 mol%, further preferably greater than 30 mol%, from the viewpoints of ensuring reactivity with silica, rubber strength, and abrasion resistance. Moreover, the vinyl bond amount of the SBR is preferably less than 70 mol%, more preferably less than 65 mol%, further preferably less than 60 mol%, from the viewpoints of prevention of increase in temperature dependency, wet grip performance, elongation at break, and abrasion resistance. Besides, the vinyl bond amount of the SBR (1,2-bond butadiene unit amount) is measured by the above-described method.

A weight-average molecular weight (Mw) of the SBR is preferably greater than 150,000, more preferably greater than 200,000, further preferably 250,000 or more, from the viewpoint of abrasion resistance. Moreover, the Mw is preferably less than 2,500,000, more preferably less than 2,000,000, further preferably less than 1,000,000, from the viewpoints of cross-linking uniformity, etc. Besides, the Mw can be calculated by the above-described method.

A content of the SBR when compounded in 100% by mass of the rubber component is preferably greater than 10% by mass, more preferably greater than 20% by mass, further preferably greater than 30% by mass, particularly preferably greater than 40% by mass, from the viewpoints of securing damping property at the tread part and wet grip performance. Moreover, it is preferably less than 85% by mass, more preferably less than 80% by mass, further preferably less than 75% by mass, particularly preferably less than 70% by mass, from the viewpoint of an improvement in durability due to suppression of heat generation of the tread part.

(BR)

The BR is not particularly limited, and those common in the tire industry can be used, such as, for example, a BR having a cis content (cis-1,4-bond butadiene unit amount) of greater than 90 mol% (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. Example of the modified BR include a BR modified with the same functional group as described for the above-described SBR, etc. BRs may be used alone, or two or more thereof may be used in combination.

Examples of the high cis BR include, for example, those manufactured by Zeon Corporation, Ube Industries, Ltd., JSR Corporation, etc. When the rubber composition comprises a high cis BR, a low temperature property and abrasion resistance can be improved. The cis content is preferably greater than 95 mol%, more preferably greater than 96 mol%, further preferably 97 mol% or more. The cis content is also preferably 98 mol% or more. Besides, the cis content is a value calculated by the above-described method.

The rare-earth-based BR is synthesized using a rare-earth element-based catalyst and has a vinyl bond amount (1,2-bond butadiene unit amount) of preferably less than 1.8 mol%, more preferably less than 1.0 mol%, further preferably less than 0.8 mol%, and a cis content (cis-1,4-bond butadiene unit amount) of preferably greater than 95 mol%, more preferably greater than 96 mol%, further preferably 97 mol% or more. As the rare-earth-based BR, for example, those manufactured by LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those manufactured by Ube Industries, Ltd., etc. can be used.

As the modified BR, a modified butadiene rubber (modified BR) is appropriately used whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A glass transition temperature (Tg) of the BR is preferably lower than -14°C, more preferably lower than -17°C, further preferably lower than - 20°C, from the viewpoint of prevention of low temperature brittleness. On the other hand, a lower limit value of the Tg is, but not particularly limited to, preferably higher than -150°C, more preferably higher than -120°C, further preferably higher than -110°C, from the viewpoint of the abrasion resistance. Besides, the glass transition temperature is a value measured by the above-described method.

A weight-average molecular weight (Mw) of the BR is preferably greater than 300,000, more preferably greater than 350,000, further preferably greater than 400,000, from the viewpoint of abrasion resistance. Moreover, it is preferably less than 2,000,000, more preferably less than 1,500,000, further preferably less than 1000,000, from the viewpoints of cross-linking uniformity, etc. Besides, the Mw can be calculated by the above-described method.

A content of the BR when compounded in 100% by mass of the rubber component is preferably greater than 1% by mass, more preferably greater than 5% by mass, further preferably 10% by mass or more, from the viewpoint of abrasion resistance. Moreover, it is preferably less than 40% by mass, more preferably less than 35% by mass, further preferably less than 30% by mass, particularly preferably less than 25% by mass, from the viewpoint of wet grip performance.

(Other rubber components)

As the rubber component according to the present invention, the rubber composition may comprise a rubber component other than the above-described isoprene-based rubber, SBR, and BR. As another rubber component, a cross-linkable rubber component commonly used in the tire industry can be used, examples of which include, for example, a diene-based rubber such as a styrene-isoprene-butadiene rubber (SIBR), a chloroprene rubber (CR), an acrylonitrile-butadiene rubber (NBR), and the like, and a non-diene-based rubber such as an ethylene propylene rubber (EPDM), a butyl rubber (IIR), a halogenated butyl rubber (X-IIR), and the like. Other rubber components may be used alone, or two or more thereof may be used in combination.

<Filler>

The rubber composition according to the present invention preferably comprises a filler. The filler preferably comprises carbon black and silica. Moreover, the filler may be a filler consisting of carbon black and silica.

(Carbon black)

Carbon black is not particularly limited, and those common in the tire industry can be used, such as GPF, FEF, HAF, ISAF, SAF, and the like. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used in addition to them. These carbon black may be used alone, or two or more thereof may be used in combination.

A nitrogen adsorption specific surface area ($N_2SA$) of the carbon black is preferably greater than 50 $m^2/g$, more preferably greater than 80 $m^2/g$, further preferably greater than 100 $m^2/g$, from the viewpoints of weather resistance and reinforcing property. Moreover, it is preferably less than 250 $m^2/g$, more preferably less than 220 $m^2/g$, further preferably less than 200 $m^2/g$, from the viewpoints of dispersibility, fuel efficiency, fracture characteristics, and durability. Besides, the $N_2SA$ of the carbon black is a value measured by the above-described method.

A content of the carbon black when compounded based on 100 parts by mass of the rubber component is preferably greater than 1 part by mass, more preferably greater than 3 parts by mass, further preferably greater than 5 parts by mass, from the viewpoints of weather resistance and reinforcing property. Moreover, it is preferably less than 40 parts by mass, more preferably less than 30 parts by mass, further preferably less than 20 parts by mass, from the viewpoint of an improvement in durability due to suppression of heat generation of the tread part.

(Silica)

Silica is not particularly limited, and for example, those common in the tire industry can be used, such as silica prepared by a dry process (anhydrous silica), silica prepared by a wet process (hydrous silica), and the like. Among them, hydrous silica prepared by a wet process is preferable from the reason that it has many silanol groups. The silica may be used alone, or two or more thereof may be used in combination.

A nitrogen adsorption specific surface area ($N_2SA$) of the silica is preferably greater than 140 $m^2/g$, more preferably 150 $m^2/g$ or more, further preferably greater than 160 $m^2/g$, particularly preferably greater than 170 $m^2/g$, from the viewpoints of reinforcing property and securement of damping property at the tread part. Moreover, it is preferably less than 350 $m^2/g$, more preferably less than 300 $m^2/g$, further preferably less than 250 $m^2/g$, from the viewpoints of heat generation and processability. Besides, the $N_2SA$ of the silica is a value measured by the above-described method.

An average primary particle size of the silica is preferably less than 20 nm, more preferably less than 19 nm, further preferably less than 18 nm. A lower limit of the average primary particle size is, but not particularly limited to, preferably greater than 1 nm, more preferably greater than 3 nm, further preferably greater than 5 nm. When the average primary particle size of the silica is within the above-described ranges, dispersibility of silica can be improved more, and reinforcing property, fracture characteristics, and abrasion resistance can be further improved. Besides, the average primary particle size of the silica can be calculated by the above-described method.

A content of the silica when compounded based on 100 parts by mass of the rubber component is preferably greater than 20 parts by mass, more preferably greater than 25 parts by mass, further preferably greater than 30 parts by mass, particularly preferably greater than 35 parts by mass, from the viewpoints of securement of damping property at the tread part and wet grip performance. Moreover, it is preferably less than 80 parts by mass, more preferably less than 75 parts by mass, further preferably less than 70 parts by mass, particularly preferably less than 65 parts by mass, from the viewpoint of reducing specific gravity of a rubber to reduce the weight and from the viewpoints of an improvement in durability due to suppression of heat generation of the tread part and securement of ride comfort due to softness of a rubber.

(Mass ratio of silica to carbon black)

A mass ratio of the silica to the carbon black is preferably greater than 1.0, more preferably greater than 2.0, further preferably greater than 3.0, particularly preferably 4.0 or more. An upper limit of the mass ratio is, but not particularly limited to, preferably less than 15.0, more preferably less than 10.0, further preferably less than 8.0, particularly preferably less than 6.0.

(Other fillers)

As the filler other than silica and carbon black, those conventionally and commonly used in the tire industry can be compounded, examples of which include, for example, aluminum hydroxide, calcium carbonate, alumina, clay, talc, etc.

(Total content of fillers)

A total content the fillers based on 100 parts by mass of the rubber component is preferably less than 200 parts by mass, more preferably less than 150 parts by mass, further preferably less than 100 parts by mass, particularly preferably less than 80 parts by mass, from the viewpoints of suppression of a complex elastic modulus at 30°C (30°CE*), in MPa, suppression of damage due to heat generation, etc. Moreover, it is preferably greater than 20 parts by mass, more preferably greater than 25 parts by mass, further preferably greater than 30 parts by mass, particularly preferably greater than 35 parts by mass, from the viewpoints of reinforcing property and securement of damping property at the tread part.

(Silane coupling agent)

The silica is preferably used in combination with a silane coupling agent. The silane coupling agent is not particularly limited, and any silane coupling agents conventionally used in combination with silica in the tire industry can be used, examples of which include, for example, a mercapto-based silane coupling agent described below; a sulfide-based silane coupling agent such as bis(3-triethoxysilylpropyl)disulfide, bis(3-triethoxysilylpropyl)tetrasulfide, and the like; a thioester-based silane coupling agent such as 3-octanoylthio-1-propyltriethoxysilane, 3-hexanoylthio-1-propyltriethoxysilane, 3-octanoylthio-1-propyltrimethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane,γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, the rubber composition preferably comprises a sulfide-based silane coupling agent and/or a mercapto-based silane coupling agent. These silane coupling agents may be used alone, or two or more thereof may be used in combination.

The mercapto-based silane coupling agent is preferably a compound represented by the following chemical

formula (1) and/or a compound comprising a bond unit A represented by the following chemical formula (2) and a bond unit B represented by the following chemical formula (3).

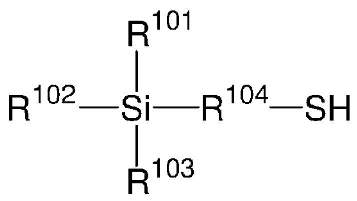

(1)

(wherein, $R^{101}$, $R^{102}$, and $R^{103}$ each independently represents an alkyl having 1 to 12 carbon atoms, alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

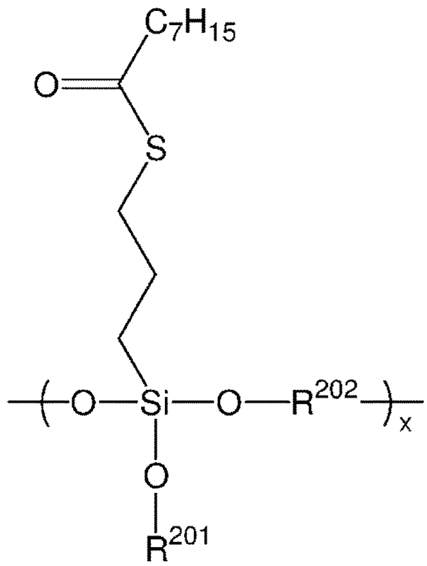

(2)

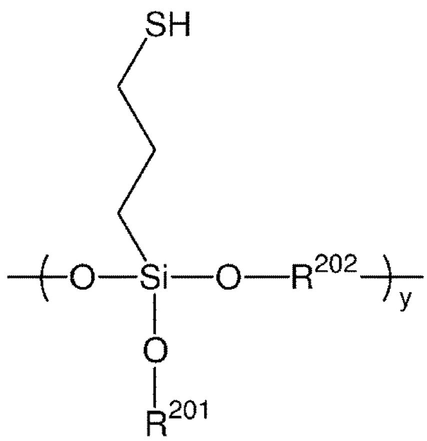

(3)

(wherein, x represents an integer of 0 or more; y represents an integer of 1 or more; $R^{201}$ represents a hydrogen atom or represents an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the chemical formula (1) include, for example, 3-mercaptopropyltrimethoxysilane, 3-mercaptopropyltriethoxysilane, 2-mercaptoethyltrimethoxysilane, 2-mercaptoethyltriethoxysilane, a

compound represented by the following chemical formula (4) (Si363 manufactured by Evonik Degussa GmbH), etc., and the compound represented by the following chemical formula (4) can be appropriately used. They may be used alone, or two or more thereof may be used in combination.

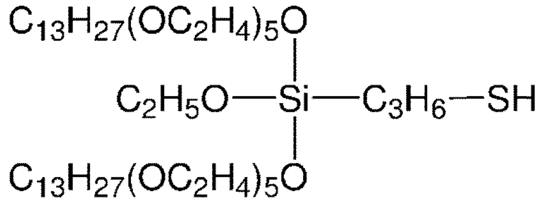

(4)

Examples of the compound comprising the bond unit A represented by the chemical formula (2) and the bond unit B represented by the chemical formula (3) include, for example, NXT-Z30, NXT-Z45, NXT-Z60, NXT-Z100, and the like which are manufactured by Momentive Performance Materials, etc. They may be used alone, or two or more thereof may be used in combination.

A content of the silane coupling agent when compounded based on 100 parts by mass of the silica is preferably greater than 1.0 part by mass, more preferably greater than 3.0 parts by mass, further preferably greater than 5.0 parts by mass, from the viewpoint of improving dispersibility of the silica. Moreover, it is preferably less than 30 parts by mass, more preferably less than 20 parts by mass, further preferably less than 15 parts by mass, from the viewpoint of preventing deterioration of abrasion resistance.

<Resin component>

The rubber composition according to the present invention preferably comprises a resin component.

Examples of the resin component include, but not particularly limited to, a petroleum resin, a terpene-based resin, a rosin-based resin, a phenol-based resin, and the like which are commonly used in the tire industry. The resin component may be used alone, or two or more thereof may be used in combination.

Examples of the petroleum resin include, for example, a C5-based petroleum resin, an aromatic petroleum resin, a C5-C9-based petroleum resin, and the like. The petroleum resin may be used alone, or two or more thereof may be used in combination.

A "C5-based petroleum resin" means a resin obtained by polymerizing C5 fractions. Examples of C5 fractions include, for example, petroleum fractions having 4 to 5 carbon atoms, such as cyclopentadiene, pentene, pentadiene, isoprene, and the like. A dicyclopentadiene resin (DCPD resin) is appropriately used as a C5-based petroleum resin. An "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As specific example of the aromatic petroleum resin, for example, a coumarone-indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and the copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, etc. can be used. A "C5-C9-based petroleum resin" means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as $\alpha$-pinene, $\beta$-pinene, limonene, dipentene, and the like; an aromatic modified terpene resin made from a terpene compound described above and an aromatic compound; and a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, $\alpha$-methylstyrene, vinyltoluene, divinyltoluene, and the like. Examples of the phenol-based compound from which the terpene phenol resin is made include, for example, phenol, bisphenol A, cresol, xylenol, and the like. The terpene-based resin may be used alone, or two or more thereof may be used in combination.

Examples of the rosin-based resin include, but not particularly limited to, for example, a natural resin rosin, and a rosin-modified resin obtained by modifying it by hydrogenation, disproportionation, dimerization, esterification, or the like. The rosin-based resin may be used alone, or two or more thereof may be used in combination.

Examples of the phenol-based resin include, but not particularly limited to, a phenol formaldehyde resin, an

alkylphenol formaldehyde resin, an alkyl phenol acetylene resin, an oil-modified phenol formaldehyde resin, and the like. The phenol-based resin may be used alone, or two or more thereof may be used in combination.

As the resin component, the rubber composition preferably comprises at least one selected from the group consisting of a C5-C9-based petroleum resin, a terpene-based resin, and a rosin-based resin, from the viewpoint of increasing a static friction coefficient.

A softening point of the resin component is preferably higher than 60°C, more preferably higher than 65°C, further preferably higher than 70°C, from the viewpoint of wet grip performance. Moreover, it is preferably lower than 150°C, more preferably lower than 140°C, further preferably lower than 130°C, from the viewpoints of processability and improvement in dispersibility of the rubber component with the filler. Besides, the softening point is measured by the above-described method.

A content of the resin component when compounded based on 100 parts by mass of the rubber component is preferably greater than 5 parts by mass, more preferably greater than 10 parts by mass, further preferably greater than 15 parts by mass, particularly preferably 20 parts by mass or more, from the viewpoint of grip performance. Moreover, it is preferably 60 parts by mass or less, more preferably less than 50 parts by mass, further preferably less than 40 parts by mass, particularly preferably 20 parts by mass or less, from the viewpoint of durability.

<Other compounding agents>

The rubber composition according to the present invention can appropriately comprise compounding agents conventionally and commonly used in the tire industry, such as, for example, oil, wax, processing aid, zinc oxide, stearic acid, an antioxidant, a vulcanizing agent such as sulfur and the like, a vulcanization accelerator, and the like, in addition to the above-described components.

Examples of the oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like. Moreover, from the viewpoint of a life cycle assessment, one obtained by refining a waste oil after use for a rubber mixing machine or an engine or waste cooking oil used in a cooking facility may be used. The oil may be used alone, or two or more thereof may be used in combination.

A content of the oil when compounded based on 100 parts by mass of the rubber component is preferably greater than 1 part by mass, more preferably greater than 2 parts by mass, further preferably greater than 3 parts by mass, from the viewpoint of processability. Moreover, it is preferably less than 80 parts by mass, more preferably less than 60 parts by mass, further preferably less than 40 parts by mass, from the viewpoints of fuel efficiency and durability. Besides, the content of the oil also includes an amount of oil contained in an oil-extended rubber.

(Wax)

The wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, and the like. As the wax, for example, those manufactured by Ouchi Shinko Chemical Industry Co., Nippon Seiro Co., Ltd., PARAMELT, etc. can be used. The wax may be used alone, or two or more thereof may be used in combination.

A content of the wax when compounded based on 100 parts by mass of the rubber component is preferably greater than 0.5 parts by mass, more preferably greater than 0.7 parts by mass, further preferably greater than 1 part by mass, from the viewpoint of weather resistance of a rubber. Moreover, it is preferably less than 10 parts by mass, more preferably less than 8 parts by mass, further preferably less than 5 parts by mass, from the viewpoint of prevention of whitening of a tire due to bloom.

(Processing aid)

As processing aid, a fatty acid metal salt aimed at lowering viscosity and securing releasability of a rubber in an unvulcanized state, those widely commercially available as compatibilizers from the viewpoint of suppression of microscopic layer separation of the rubber component, and the like can be used.

A content of the processing aid when compounded based on 100 parts by mass of the rubber component is preferably greater than 0.5 parts by mass, more preferably greater than 0.7 parts by mass, further preferably greater than 1 part by mass, from the viewpoint of exhibiting an effect of improving processability. Moreover, it is preferably less than 10 parts by mass, more preferably less than 8 parts by mass, further preferably less than 5 parts by mass, from the viewpoints

of abrasion resistance and breaking strength.

(Antioxidant)

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. The antioxidant may be used alone, or two or more thereof may be used in combination.

A content of the antioxidant when compounded based on 100 parts by mass of the rubber component is preferably greater than 0.5 parts by mass, more preferably greater than 0.7 parts by mass, further preferably greater than 1 part by mass, from the viewpoint of ozone crack resistance of a rubber. Moreover, it is preferably less than 10 parts by mass, more preferably less than 7 parts by mass, further preferably less than 5 parts by mass, from the viewpoints of abrasion resistance and wet grip performance.

(Zinc oxide)

A content of the zinc oxide when compounded based on 100 parts by mass of the rubber component is preferably greater than 0.5 parts by mass, more preferably greater than 0.7 parts by mass, further preferably greater than 1 part by mass, from the viewpoint of processability. Moreover, it is preferably less than 10 parts by mass, more preferably less than 7 parts by mass, further preferably less than 5 parts by mass, from the viewpoint of abrasion resistance.

(Stearic acid)

A content of the stearic acid when compounded based on 100 parts by mass of the rubber component is preferably greater than 0.5 parts by mass, more preferably greater than 0.7 parts by mass, further preferably greater than 1 part by mass, from the viewpoint of processability. Moreover, it is preferably less than 10 parts by mass, more preferably less than 7 parts by mass, further preferably less than 5 parts by mass, from the viewpoint of vulcanization rate.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably greater than 0.1 parts by mass, more preferably greater than 0.3 parts by mass, further preferably greater than 0.5 parts by mass, from the viewpoint of securing a sufficient vulcanization reaction. Moreover, it is preferably less than 5.0 parts by mass, more preferably less than 4.0 parts by mass, further preferably less than 3.0 parts by mass, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, but not particularly limited to, for example, sulfenamide-based, thiazole-based, thiuram-based, thiourea-based, guanidine-based, dithiocarbamate-based, aldehyde-amine-based or aldehyde-ammonia-based, imidazoline-based, xanthate-based vulcanization accelerators, and the like. Among them, a sulfenamide-based vulcanization accelerator and a guanidine-based vulcanization accelerator are preferable from the viewpoint that desired effects can be more appropriately obtained. The vulcanization accelerator may be used alone, or two or more thereof may be used in combination.

Examples of the sulfenamide-based vulcanization accelerator include N-cyclohexyl-2-benzothiazolyl sulfenamide (CBS), N-(tert-butyl)-2-benzothiazolyl sulfenamide (TBBS), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like.

Examples of the guanidine-based vulcanization accelerator include diphenylguanidine (DPG), diorthotrilguanidine, orthotrilbiguanidine, and the like.

A content of the vulcanization accelerator when compounded based on 100 parts by mass of the rubber component is preferably greater than 1.0 part by mass, more preferably greater than 1.5 parts by mass, further preferably greater than 2.0 parts by mass. Moreover, the content of the vulcanization accelerator based on 100 parts by mass of the rubber component is preferably less than 8.0 parts by mass, more preferably less than 7.0 parts by mass, further preferably less than 6.0 parts by mass, particularly preferably less than 5.0 parts by mass. When the content of the vulcanization accelerator is within the above-described ranges, breaking strength and elongation tend to be secured.

[Production]

The tire of the present invention comprising a tread composed of a predetermined rubber composition can be produced by a known method.

The rubber composition can be produced by a known method, and for example, it can be produced by kneading the above-described components with a rubber kneading machine such as an open roll, a sealed type kneader (a Banbury mixer, a kneader, etc.), and the like.

A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire of the present invention can be produced by a usual method. That is, the tire can be produced by extruding the above-described unvulcanized rubber composition into a shape of a tread with an extruder equipped with a mouthpiece having a predetermined shape, attaching the extruded unvulcanized tread together with other tire members on a tire forming machine to form an unvulcanized tire by a usual molding method, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

[Application]

Examples of the tire of the present invention include a pneumatic tire, a non-pneumatic tire, and the like. Among them, a pneumatic tire is preferable. Moreover, the tire of the present invention can be used as a tire for a passenger car, a tire for a large passenger car, a tire for a large SUV, a heavy-duty tire for truck, bus, etc., a tire for light truck, a motorcycle tire, a racing tire (high-performance tire), and the like. Among them, the tire of the present invention can be appropriately used as a tire for a passenger car.

EXAMPLES

Hereinafter, examples considered to be preferable in implementing the present invention (Examples) will be described, though the scope of the present invention is not limited to these Examples only.

Tires are studied which comprise treads composed of rubber compositions obtained using various chemicals described below in accordance with Tables described below, and results calculated based on analysis/evaluation methods described below are shown in Tables 1 to 3.

NR: TSR 20
SBR: Modified solution-polymerized SBR manufactured in a Production example 1 described later (styrene content: 30% by mass, vinyl bond amount: 52 mol%, Mw: 250,000, non-oil extended product)
BR: Ubepol BR (Registered Trademark) 150B manufactured by Ube Industries, Ltd. (cis content: 97 mol%, Tg: -108°C, Mw: 440,000)
Carbon black: DIABLACK N220 manufactured by Mitsubishi Chemical Corporation ($N_2SA$: 115 $m^2/g$)
Silica: Ultrasil (Registered Trademark) VN3 manufactured by Evonik Degussa GmbH ($N_2SA$: 175 $m^2/g$, average primary particle size: 17 nm)
Silane coupling agent: Si266 manufactured by Evonik Degussa GmbH (bis(3-triethoxysilylpropyl)disulfide)
Oil: VivaTec 400 manufactured by H&R Group (TDAE oil)

Resin component 1: PETROTACK 100V manufactured by Tosoh Corporation (C5-C9-based petroleum resin, copolymer of C5 fraction and C9 fraction, softening point: 96°C)
Resin component 2: YS RESIN PX1150 manufactured by YASUHARA CHEMICAL CO., LTD. (terpene-based resin, polyterpene (β-pinene resin), softening point: 115°C)
Resin component 3: HARIMACK T-80 manufactured by Harima Chemicals, Inc. (rosin-based resin, maleic acid modified rosin resin, softening point: 85°C)
Resin component 4: Sylvares SA85 manufactured by Kraton Corporation (aromatic vinyl-based resin, copolymer of α-methylstyrene and styrene, softening point: 85°C)
Zinc oxide: Zinc oxide No. 1 manufactured by Mitsui Mining & Smelting Co., Ltd.
Stearic acid: Bead stearic acid "CAMELLIA" manufactured by NOF CORPORATION
Antioxidant: Nocrac 6C manufactured by Ouchi Shinko Chemical Industry Co., Ltd. (N-phenyl-N'-(1,3-dimethylbutyl)-p-phenylenediamine)
Wax: OZOACE OZ0355 manufactured by Nippon Seiro Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

Production example 1: Synthesis of SBR

In an autoclave reactor subjected to nitrogen purge, cyclohexane, tetrahydrofuran, styrene, and 1,3-butadiene are charged. After adjusting temperature of contents in the reactor to 20°C, n-butyllithium is added to initiate polymerization. The polymerization is performed under an adiabatic condition, and the temperature reaches 85°C of the maximum temperature. When a polymerization conversion rate reaches 99%, 1,3-butadiene is added, and after further polymerization for 5 minutes, N,N-bis(trimethylsilyl)-3-aminopropyltrimethoxysilane is added as a modifying agent to perform reaction. After completion of the polymerization reaction, 2,6-di-tert-butyl-p-cresol is added. Next, the mixture is subjected to removal of solvent by a steam stripping and dried with a heat roll whose temperature is adjusted to 110°C to obtain a SBR.

<Example and Comparative example>

According to the compounding formulations shown in each Table, using a 1.7 L closed Banbury mixer, all chemicals other than sulfur and a vulcanization accelerator are kneaded for 1 to 10 minutes until the temperature reaches a discharge temperature of 150°C to 160°C, to obtain a kneaded product. Next, using a twin-screw open roll, the sulfur and vulcanization accelerator are added to the obtained kneaded product, and the mixture is kneaded for 4 minutes until the temperature reaches 105°C, to obtain an unvulcanized rubber composition. The obtained unvulcanized rubber composition is press-vulcanized at 170°C for 12 minutes, thereby producing each test rubber composition.

Each of unvulcanized rubber compositions with compounding amounts shown in Tables 1 to 3 is extruded with an extruder equipped with a mouthpiece into a shape of a tread and attached together with tire members other than the tread on a tire forming machine, thereby forming an unvulcanized tire, and the unvulcanized tire is press-vulcanized under a condition of a temperature at 170°C for 12 minutes, thereby producing and preparing each of a test tire 1 (size: 195/65R15 91V, rim:15 × 6.0J), a test tire 2 (size: 215/55R18 95T, rim:18 × 7.0J), and a test tire 3 (size: 215/60R16 99V, rim:16 × 6.5J).

The following evaluations are carried out for the obtained test rubber compositions and test tires. Evaluation results are shown in Tables 1 to 3. Besides, each maximum load capacity WL, in kg, is a value calculated by the above-described inequalities (1) and (2) from a tire cross-sectional width Wt, in mm, a tire cross-sectional height Ht, in mm, and a tire outer diameter Dt, in mm, of each test tire that are measured in a standardized state.

<30°C tan δ, 0°C tan δ, and 30°CE*>

A sample having a length of 20 mm, a width of 4 mm, and a thickness of 1 mm is cut out from inside of a tread of each test tire such that a tire circumferential direction becomes a long side and a tire radial direction becomes a thickness, and the sample is used as a rubber test piece.

For each rubber test piece, a tan δ is measured using EPLEXOR series manufactured by gabo Systemtechnik GmbH under a condition of a temperature at 0°C, an initial strain of 10%, a dynamic strain of 2.5%, and a frequency of 10 Hz and under a condition of a temperature at 30°C, an initial strain of 5%, a dynamic strain of 1%, and a frequency of 10 Hz, respectively.

Moreover, for each rubber test piece, a complex elastic modulus ($E_*$), in MPa, is measured under a condition of a temperature at 30°C, an initial strain of 5%, a dynamic strain of 1%, and a frequency of 10 Hz.

<Static friction coefficient μ>

A sample having a length of 27 mm, a width of 25 mm, and a thickness of 8 mm is cut out from a surface of the tread of each test tire such that the tire circumferential direction becomes a long side and the tire radial direction becomes a thickness, and the sample is used as a rubber test piece.

For each rubber test piece, a static friction coefficient is measured using TL501 SLIPMETER (manufactured by Trinity-Lab. Inc.) on a road surface according to ISO15222 under a condition of a grounding pressure of 0.30 MPa and a measurement temperature at 25°C by taking 3 seconds to push down the shaft of the SLIPMETER at a constant speed from $\theta$ = 0° (vertical position) to 60°. The static friction coefficient is measured five times in the same manner, and an average value of obtained static friction coefficients is defined as μ.

<Dry grip performance >

Each test tire is mounted on all wheels of a vehicle (a domestic FF vehicle with a displacement of 2000 cc), and a braking distance from a point at which the vehicle running at a speed of 100 km/h on a dry asphalt road surface is braked is measured. An inverse value of a braking distance of each test tire is indicated as an index using the following equation with a braking distance of a control tire (reference Comparative example) being as 100. The results show that the higher the index is, the more excellent the dry grip performance is.

(Dry grip performance index) = (Braking distance of control tire)/ (Braking distance of each test tire).

Table 1: Test tire 1 (size: 195/65R15 91V, rim:15 ×6.0J)

| | Example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 40 | 40 | 40 | 40 | 40 | 40 | 70 | 30 |
| SBR | 50 | 50 | 50 | 50 | 50 | 50 | 20 | 50 |
| BR | 10 | 10 | 10 | 10 | 10 | 10 | 10 | 20 |
| Carbon black | 15 | 15 | 15 | 15 | 15 | 15 | 30 | 15 |
| Silica | 60 | 60 | 60 | 60 | 60 | 60 | 55 | 60 |
| Silane coupling agent | 6 | 6 | 6 | 6 | 6 | 6 | 5.5 | 6 |
| Oil | 10 | - | - | - | - | - | 10 | - |
| Resin component 1 | 20 | - | - | - | - | - | - | - |
| Resin component 2 | - | 20 | - | - | 25 | - | 30 | 25 |
| Resin component 3 | - | - | 20 | 20 | - | 25 | - | - |
| Resin component 4 | - | - | - | - | - | - | - | - |
| Zinc oxide | 3 | 3 | 3 | 3 | 3 | 3 | 3 | 3 |
| Stearic acid | 3 | 3 | 3 | 3 | 3 | 3 | 3 | 3 |
| Antioxidant | 3 | 3 | 3 | 3 | 3 | 3 | 3 | 3 |
| Wax | 2 | 2 | 2 | 2 | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Physical properties | | | | | | | | |
| 30°C tan $\delta$ | 0.23 | 0.24 | 0.21 | 0.21 | 0.25 | 0.22 | 0.26 | 0.24 |
| 30°C$E_*$ in MPa | 8.1 | 8.2 | 8.0 | 8.0 | 8.3 | 8.1 | 8.9 | 8.2 |
| 0°C tan $\delta$ | 0.57 | 0.64 | 0.55 | 0.55 | 0.66 | 0.57 | 0.40 | 0.61 |
| 30°C tan $\delta$ × 0°C tan $\delta$ | 0.13 | 0.15 | 0.12 | 0.12 | 0.17 | 0.13 | 0.10 | 0.15 |

(continued)

| | Example | | | | | | | |
|---|---|---|---|---|---|---|---|---|
| | 1 | 2 | 3 | 4 | 5 | 6 | 7 | 8 |
| Static friction coefficient (μ) | 0.70 | 0.76 | 0.80 | 0.80 | 0.79 | 0.82 | 0.78 | 0.77 |
| Tire | | | | | | | | |
| G in kg | 6.95 | 6.95 | 6.95 | 7.70 | 6.95 | 6.95 | 6.95 | 6.95 |
| WL in kg | 531 | 531 | 531 | 531 | 531 | 531 | 531 | 531 |
| G/WL | 0.0131 | 0.0131 | 0.0131 | 0.0145 | 0.0131 | 0.0131 | 0.0131 | 0.0131 |
| (G/WL)/μ | 0.0187 | 0.0172 | 0.0164 | 0.0181 | 0.0166 | 0.0160 | 0.0168 | 0.0170 |
| Dry grip performance | 104 | 108 | 110 | 109 | 110 | 112 | 102 | 109 |

- continued -

| | Comparative example | | | | |
|---|---|---|---|---|---|
| | 1 | 2 | 3 | 4 | 5 |
| Compounding amount (part by mass) | | | | | |
| NR | 40 | 40 | 40 | 40 | 40 |
| SBR | 50 | 50 | 50 | 50 | 50 |
| BR | 10 | 10 | 10 | 10 | 10 |
| Carbon black | 15 | 15 | 15 | 15 | 15 |
| Silica | 60 | 60 | 75 | 75 | 60 |
| Silane coupling agent | 6 | 6 | 7.5 | 7.5 | 6 |
| Oil | 10 | 10 | 20 | 20 | - |
| Resin component 1 | - | - | - | - | - |
| Resin component 2 | - | - | - | - | 15 |
| Resin component 3 | - | - | - | - | - |
| Resin component 4 | - | 20 | - | - | - |
| Zinc oxide | 3 | 3 | 3 | 3 | 3 |
| Stearic acid | 3 | 3 | 3 | 3 | 3 |
| Antioxidant | 3 | 3 | 3 | 3 | 3 |
| Wax | 2 | 2 | 2 | 2 | 2 |
| Sulfur | 1.5 | 1.5 | 1.5 | 1.5 | 1.5 |
| Vulcanization accelerator 1 | 2 | 2 | 2 | 2 | 2 |
| Vulcanization accelerator 2 | 1 | 1 | 1 | 1 | 1 |
| Physical properties of rubber | | | | | |
| 30°C tan δ | 0.20 | 0.23 | 0.20 | 0.20 | 0.23 |
| 30°CE* in MPa | 7.8 | 8.0 | 8.1 | 8.1 | 8.1 |
| 0°C tan δ | 0.42 | 0.64 | 0.42 | 0.42 | 0.57 |
| 30°C tan δ × 0°C tan δ | 0.08 | 0.15 | 0.08 | 0.08 | 0.13 |
| Static friction coefficient (μ) | 0.60 | 0.61 | 0.61 | 0.62 | 0.72 |
| Tire | | | | | |
| G in kg | 6.95 | 6.95 | 6.95 | 8.10 | 8.05 |
| WL in kg | 531 | 531 | 531 | 531 | 531 |
| G/WL | 0.0131 | 0.0131 | 0.0131 | 0.0153 | 0.0152 |
| (G/WL)/μ | 0.0218 | 0.0215 | 0.0215 | 0.0246 | 0.0211 |
| Dry grip performance | 95 | 100 | 98 | 96 | 99 |

Table 2: Test tire 2 (size: 215/55R18 95T, rim:18 ×7.0J)

| | Example | | | | | |
|---|---|---|---|---|---|---|
| | 9 | 10 | 11 | 12 | 13 | 14 |
| Compounding amount (part by mass) | | | | | | |
| NR | 40 | 40 | 40 | 40 | 40 | 40 |
| SBR | 50 | 50 | 50 | 50 | 50 | 50 |
| BR | 10 | 10 | 10 | 10 | 10 | 10 |
| Carbon black | 15 | 15 | 15 | 15 | 15 | 15 |
| Silica | 60 | 60 | 60 | 60 | 60 | 60 |
| Silane coupling agent | 6 | 6 | 6 | 6 | 6 | 6 |
| Oil | 10 | - | - | - | - | - |
| Resin component 1 | 20 | - | - | - | - | - |
| Resin component 2 | - | 20 | - | - | 25 | - |
| Resin component 3 | - | - | 20 | 20 | - | 25 |
| Resin component 4 | - | - | - | - | - | - |
| Zinc oxide | 3 | 3 | 3 | 3 | 3 | 3 |
| Stearic acid | 3 | 3 | 3 | 3 | 3 | 3 |
| Antioxidant | 3 | 3 | 3 | 3 | 3 | 3 |
| Wax | 2 | 2 | 2 | 2 | 2 | 2 |
| Sulfur | 1.5 | 1.5 | 1.5 | 1.5 | 1.5 | 1.5 |
| Vulcanization accelerator 1 | 2 | 2 | 2 | 2 | 2 | 2 |
| Vulcanization accelerator 2 | 1 | 1 | 1 | 1 | 1 | 1 |
| Physical properties of rubber | | | | | | |
| 30°C tan $\delta$ | 0.23 | 0.24 | 0.21 | 0.21 | 0.25 | 0.22 |
| 30°CE* in MPa | 8.1 | 8.2 | 8.0 | 8.0 | 8.3 | 8.1 |
| 0°C tan $\delta$ | 0.57 | 0.64 | 0.55 | 0.55 | 0.66 | 0.57 |
| 30°C tan $\delta$ × 0°C tan $\delta$ | 0.13 | 0.15 | 0.12 | 0.12 | 0.17 | 0.13 |
| Static friction coefficient ($\mu$) | 0.70 | 0.76 | 0.80 | 0.80 | 0.79 | 0.82 |
| Tire | | | | | | |
| G in kg | 8.95 | 8.95 | 8.95 | 9.11 | 8.95 | 8.95 |
| WL in kg | 606 | 606 | 606 | 606 | 606 | 606 |
| G/WL | 0.0148 | 0.0148 | 0.0148 | 0.0150 | 0.0148 | 0.0148 |
| (G/WL)/$\mu$ | 0.0211 | 0.0194 | 0.0185 | 0.0188 | 0.0187 | 0.0180 |
| Dry grip performance | 102 | 105 | 107 | 104 | 106 | 107 |

- continued -

| | Comparative example | | | | |
|---|---|---|---|---|---|
| | 6 | 7 | 8 | 9 | 10 |
| Compounding amount (part by mass) | | | | | |
| NR | 40 | 40 | 40 | 40 | 40 |
| SBR | 50 | 50 | 50 | 50 | 50 |
| BR | 10 | 10 | 10 | 10 | 10 |
| Carbon black | 15 | 15 | 15 | 15 | 15 |
| Silica | 60 | 60 | 75 | 75 | 60 |
| Silane coupling agent | 6 | 6 | 7.5 | 7.5 | 6 |
| Oil | 10 | 10 | 20 | 20 | - |
| Resin component 1 | - | - | - | - | - |

(continued)

| | Comparative example | | | | |
|---|---|---|---|---|---|
| | 6 | 7 | 8 | 9 | 10 |
| Resin component 2 | - | - | - | - | 15 |
| Resin component 3 | - | - | - | - | - |
| Resin component 4 | - | 20 | - | - | - |
| Zinc oxide | 3 | 3 | 3 | 3 | 3 |
| Stearic acid | 3 | 3 | 3 | 3 | 3 |
| Antioxidant | 3 | 3 | 3 | 3 | 3 |
| Wax | 2 | 2 | 2 | 2 | 2 |
| Sulfur | 1.5 | 1.5 | 1.5 | 1.5 | 1.5 |
| Vulcanization accelerator 1 | 2 | 2 | 2 | 2 | 2 |
| Vulcanization accelerator 2 | 1 | 1 | 1 | 1 | 1 |
| Physical properties of rubber | | | | | |
| 30°C tan $\delta$ | 0.20 | 0.23 | 0.20 | 0.20 | 0.23 |
| 30°CE* in MPa | 7.8 | 8.0 | 8.1 | 8.1 | 8.1 |
| 0°C tan $\delta$ | 0.42 | 0.64 | 0.42 | 0.42 | 0.57 |
| 30°C tan $\delta \times$ 0°C tan $\delta$ | 0.08 | 0.15 | 0.08 | 0.08 | 0.13 |
| Static friction coefficient ($\mu$) | 0.60 | 0.61 | 0.61 | 0.62 | 0.72 |
| Tire | | | | | |
| G in kg | 8.95 | 8.95 | 8.95 | 9.45 | 9.15 |
| WL in kg | 606 | 606 | 606 | 606 | 606 |
| G/WL | 0.0148 | 0.0148 | 0.0148 | 0.0156 | 0.0151 |
| (G/WL)/$\mu$ | 0.0246 | 0.0242 | 0.0242 | 0.0252 | 0.0210 |
| Dry grip performance | 95 | 96 | 93 | 92 | 100 |

Table 3: Test tire 3 (size: 215/60R16 99V, rim:16 $\times$6.5J)

| | Example | | | | | |
|---|---|---|---|---|---|---|
| | 15 | 16 | 17 | 18 | 19 | 20 |
| Compounding amount (part by mass) | | | | | | |
| NR | 40 | 40 | 40 | 40 | 40 | 40 |
| SBR | 50 | 50 | 50 | 50 | 50 | 50 |
| BR | 10 | 10 | 10 | 10 | 10 | 10 |
| Carbon black | 15 | 15 | 15 | 15 | 15 | 15 |
| Silica | 60 | 60 | 60 | 60 | 60 | 60 |
| Silane coupling agent | 6 | 6 | 6 | 6 | 6 | 6 |
| Oil | 10 | - | - | - | - | - |
| Resin component 1 | 20 | - | - | - | - | - |
| Resin component 2 | - | 20 | - | - | 25 | - |
| Resin component 3 | - | - | 20 | 20 | - | 25 |
| Resin component 4 | - | - | - | - | - | - |
| Zinc oxide | 3 | 3 | 3 | 3 | 3 | 3 |
| Stearic acid | 3 | 3 | 3 | 3 | 3 | 3 |
| Antioxidant | 3 | 3 | 3 | 3 | 3 | 3 |
| Wax | 2 | 2 | 2 | 2 | 2 | 2 |
| Sulfur | 1.5 | 1.5 | 1.5 | 1.5 | 1.5 | 1.5 |
| Vulcanization accelerator 1 | 2 | 2 | 2 | 2 | 2 | 2 |
| Vulcanization accelerator 2 | 1 | 1 | 1 | 1 | 1 | 1 |

(continued)

| | Example | | | | | |
|---|---|---|---|---|---|---|
| | 15 | 16 | 17 | 18 | 19 | 20 |
| Physical properties of rubber | | | | | | |
| 30°C tan δ | 0.23 | 0.24 | 0.21 | 0.21 | 0.25 | 0.22 |
| 30°CE* in MPa | 8.1 | 8.2 | 8.0 | 8.0 | 8.3 | 8.1 |
| 0°C tan δ | 0.57 | 0.64 | 0.55 | 0.55 | 0.66 | 0.57 |
| 30°C tan δ × 0°C tan δ | 0.13 | 0.15 | 0.12 | 0.12 | 0.17 | 0.13 |
| Static friction coefficient (μ) | 0.70 | 0.76 | 0.80 | 0.80 | 0.79 | 0.82 |
| Tire | | | | | | |
| G in kg | 8.53 | 8.53 | 8.53 | 9.10 | 8.53 | 8.53 |
| WL in kg | 613 | 613 | 613 | 613 | 613 | 613 |
| G/WL | 0.0139 | 0.0139 | 0.0139 | 0.0148 | 0.0139 | 0.0139 |
| (G/WL)/μ | 0.0199 | 0.0183 | 0.0174 | 0.0186 | 0.0176 | 0.0170 |
| Dry grip performance | 103 | 106 | 108 | 107 | 108 | 109 |

- continued -

| | Comparative example | | | | |
|---|---|---|---|---|---|
| | 11 | 12 | 13 | 14 | 15 |
| Compounding amount (part by mass) | | | | | |
| NR | 40 | 40 | 40 | 40 | 40 |
| SBR | 50 | 50 | 50 | 50 | 50 |
| BR | 10 | 10 | 10 | 10 | 10 |
| Carbon black | 15 | 15 | 15 | 15 | 15 |
| Silica | 60 | 60 | 75 | 75 | 60 |
| Silane coupling agent | 6 | 6 | 7.5 | 7.5 | 6 |
| Oil | 10 | 10 | 20 | 20 | - |
| Resin component 1 | - | - | - | - | - |
| Resin component 2 | - | - | - | - | 15 |
| Resin component 3 | - | - | - | - | - |
| Resin component 4 | - | 20 | - | - | - |
| Zinc oxide | 3 | 3 | 3 | 3 | 3 |
| Stearic acid | 3 | 3 | 3 | 3 | 3 |
| Antioxidant | 3 | 3 | 3 | 3 | 3 |
| Wax | 2 | 2 | 2 | 2 | 2 |
| Sulfur | 1.5 | 1.5 | 1.5 | 1.5 | 1.5 |
| Vulcanization accelerator 1 | 2 | 2 | 2 | 2 | 2 |
| Vulcanization accelerator 2 | 1 | 1 | 1 | 1 | 1 |
| Physical properties of rubber | | | | | |
| 30°C tan δ | 0.20 | 0.23 | 0.20 | 0.20 | 0.23 |
| 30°CE* in MPa | 7.8 | 8.0 | 8.1 | 8.1 | 8.1 |
| 0°C tan δ | 0.42 | 0.64 | 0.42 | 0.42 | 0.57 |
| 30°C tan δ × 0°C tan δ | 0.08 | 0.15 | 0.08 | 0.08 | 0.13 |
| Static friction coefficient (μ) | 0.60 | 0.61 | 0.61 | 0.62 | 0.72 |
| Tire | | | | | |
| G in kg | 8.53 | 8.53 | 8.53 | 9.30 | 9.25 |
| WL in kg | 613 | 613 | 613 | 613 | 613 |

(continued)

| | Comparative example | | | | |
|---|---|---|---|---|---|
| | 11 | 12 | 13 | 14 | 15 |
| G/WL | 0.0139 | 0.0139 | 0.0139 | 0.0152 | 0.0151 |
| (G/WL)/μ | 0.0232 | 0.0228 | 0.0228 | 0.0245 | 0.0210 |
| Dry grip performance | 96 | 98 | 97 | 95 | 100 |

REFERENCE SIGNS LIST

Wt Tire cross-sectional width
Ht Tire cross-sectional height
Dt Tire outer diameter
11 Center circumferential groove
12 Outermost circumferential groove
13 Outermost circumferential groove
21 Center land part
22 Center land part
23 Shoulder land part
24 Shoulder land part
31 Widening lateral groove
32 Widening lateral groove
33 Widening lateral groove
34 Widening lateral groove
35 Center lateral groove
36 Center lateral groove
37 Shoulder lateral groove
38 Shoulder lateral groove
Te Tread grounding end
EP Tire equatorial plane

## Claims

**1.** A tire comprising a tread,

wherein the tread is composed of a rubber composition comprising a rubber component,
wherein a ratio (G/WL) of a tire weight G, in kg, to a maximum load capacity WL, in kg, of the tire is 0.0150 or less, wherein WL is determined as detailed in the description,
wherein, when an average value of static friction coefficients, determined as detailed in the description, of the rubber composition measured five times at a grounding pressure of 0.30 MPa and at a measurement temperature of 25°C on a road surface according to ISO15222 is referred to as μ, G/WL and μ satisfy the following inequality (1),

$$(G/WL)/\mu \leq 0.0214 \quad (1).$$

**2.** The tire of claim 1, wherein a value of G/WL is 0.0140 or less.

**3.** The tire of claim 1 or 2, wherein a value of μ is 0.65 or more.

**4.** The tire of any one of claims 1 to 3, wherein a value on the right side of the inequality (1) is 0.0202.

**5.** The tire of any one of claims 1 to 4, wherein the rubber component comprises an isoprene-based rubber.

**6.** The tire of any one of claims 1 to 5, wherein the rubber composition comprises a resin component.

7. The tire of any one of claims 1 to 6, wherein a loss tangent (30°C tan δ) of the rubber composition measured under a condition of a temperature at 30°C, an initial strain of 5%, a dynamic strain of 1%, and a frequency of 10 Hz is greater than 0.17.

8. The tire of any one of claims 1 to 7, wherein a complex elastic modulus (30°CE*), in MPa, of the rubber composition measured under a condition of a temperature at 30°C, an initial strain of 5%, a dynamic strain of 1%, and a frequency of 10 Hz is less than 9.5.

9. The tire of any one of claims 1 to 8, wherein a product of a loss tangent (30°C tan δ) of the rubber composition measured under a condition of a temperature at 30°C, an initial strain of 5%, a dynamic strain of 1%, and a frequency of 10 Hz and a loss tangent (0°C tan δ) of the rubber composition measured under a condition of a temperature at 0°C, an initial strain of 10%, a dynamic strain of 2.5%, and a frequency of 10 Hz is greater than 0.11.

10. The tire of any one of claims 1 to 9,

wherein the rubber composition comprises a resin component, and
wherein a content of the resin component based on 100 parts by mass of the rubber component is greater than 10 parts by mass.

11. The tire of any one of claims 1 to 10,

wherein the rubber composition comprises a resin component, and
wherein the resin component comprises at least one selected from the group consisting of a C5-C9-based petroleum resin, a terpene-based resin, and a rosin-based resin.

12. The tire of any one of claims 1 to 11,

wherein the rubber composition comprises a filler,
wherein the filler comprises carbon black and silica, and
wherein a mass ratio of the silica to the carbon black is greater than 1.0.

13. The tire of any one of claims 1 to 12,

wherein a tread surface of the tread comprises

one or more circumferential grooves extending continuously in a tire circumferential direction, and
land parts partitioned off by the circumferential grooves,

wherein each of the land parts comprises a lateral groove extending in a tire width direction, and
wherein the lateral groove comprises a part whose groove width on a cross section perpendicular to a tire radial direction is wider than a groove width on the tread surface.

14. The tire of any one of claims 1 to 13,

wherein a tread surface of the tread comprises

one or more circumferential grooves extending continuously in a tire circumferential direction, and
land parts partitioned off by the circumferential grooves, and

wherein a ratio of an area of the circumferential grooves to an area of a tread grounding surface is greater than 19% and less than 32%.

15. The tire of any one of claims 1 to 14,

wherein a tread surface of the tread comprises

three or more circumferential grooves extending continuously in a tire circumferential direction, and
land parts partitioned off by the circumferential grooves,

wherein the circumferential grooves consist of

a pair of outermost circumferential grooves located on outermost sides in the tire width direction, and
at least one center circumferential groove located inside in the tire width direction with respect to the pair of outermost circumferential grooves,

wherein the land parts are partitioned off into

shoulder land parts located outside in the tire width direction with respect to the outermost circumferential grooves, and
center land parts located inside in the tire width direction with respect to the outermost circumferential grooves,

wherein each of the shoulder land parts comprises a shoulder lateral groove extending in the tire width direction, and each of the center land parts comprises a center lateral groove extending in the tire width direction,
wherein one end of the shoulder lateral groove is open to a tread grounding end, and the other end of the shoulder lateral groove is open to an outermost circumferential groove,
wherein one end of the center lateral groove is open to an outermost circumferential groove, and the other end of the center lateral groove is open to the center circumferential groove, and
wherein the shoulder lateral groove and the center lateral groove constitute a series of lateral grooves extending continuously from the tread grounding end toward a tire equatorial plane.

**Patentansprüche**

1. Reifen, umfassend einen Laufstreifen,

wobei der Laufstreifen mit einer Kautschukzusammensetzung aufgebaut ist, die eine Kautschukkomponente umfasst,
wobei ein Verhältnis (G/WL) eines Reifengewichts G, in kg, zu einer maximalen Tragfähigkeit WL, in kg, des Reifens 0,0150 oder weniger beträgt, wobei WL bestimmt ist wie in der Beschreibung angegeben,
wobei, wenn ein Mittelwert von Haftreibungskoeffizienten, bestimmt wie in der Beschreibung angegeben, der Kautschukzusammensetzung, fünf Mal gemessen bei einem Bodenberührungsdruck von 0,30 MPa und bei einer Messtemperatur von 25°C auf einer Straßenoberfläche gemäß ISO15222, als $\mu$ bezeichnet ist, G/WL und $\mu$ der folgenden Ungleichung (1) genügen,

$$(G/WL)/\mu \leq 0{,}0214 \qquad (1).$$

2. Reifen nach Anspruch 1, wobei ein Wert von G/WL 0,0140 oder weniger beträgt.

3. Reifen nach Anspruch 1 oder 2, wobei ein Wert von $\mu$ 0,65 oder mehr beträgt.

4. Reifen nach einem der Ansprüche 1 bis 3, wobei ein Wert auf der rechten Seite der Ungleichung (1) 0,0202 beträgt.

5. Reifen nach einem der Ansprüche 1 bis 4, wobei die Kautschukkomponente einen Isopren-basierten Kautschuk umfasst.

6. Reifen nach einem der Ansprüche 1 bis 5, wobei die Kautschukzusammensetzung eine Harzkomponente umfasst.

7. Reifen nach einem der Ansprüche 1 bis 6, wobei ein Verlusttangens (30°C tan $\delta$) der Kautschukzusammensetzung, gemessen unter Bedingungen einer Temperatur bei 30°C, einer anfänglichen Dehnung von 5%, einer dynamischen Dehnung von 1% und einer Frequenz von 10 Hz, mehr als 0,17 beträgt.

8. Reifen nach einem der Ansprüche 1 bis 7, wobei ein komplexer Elastizitätsmodul (30°C E*), in MPa, der Kautschukzusammensetzung, gemessen unter Bedingungen einer Temperatur bei 30°C, einer anfänglichen Dehnung von 5%, einer dynamischen Dehnung von 1% und einer Frequenz von 10 Hz, weniger als 9,5 beträgt.

**9.** Reifen nach einem der Ansprüche 1 bis 8, wobei ein Produkt eines Verlusttangens (30°C tan δ) der Kautschukzusammensetzung, gemessen unter Bedingungen einer Temperatur bei 30°C, einer anfänglichen Dehnung von 5%, einer dynamischen Dehnung von 1% und einer Frequenz von 10 Hz, und einem Verlusttangens (0°C tan δ) der Kautschukzusammensetzung, gemessen unter Bedingungen einer Temperatur bei 0°C, einer anfänglichen Dehnung von 10%, einer dynamischen Dehnung von 2,5% und einer Frequenz von 10 Hz, mehr als 0,11 beträgt.

**10.** Reifen nach einem der Ansprüche 1 bis 9,

wobei die Kautschukzusammensetzung eine Harzkomponente umfasst, und
wobei ein Gehalt der Harzkomponente, bezogen auf 100 Massenteile der Kautschukkomponente, mehr als 10 Massenteile beträgt.

**11.** Reifen nach einem der Ansprüche 1 bis 10,

wobei die Kautschukzusammensetzung eine Harzkomponente umfasst, und
wobei die Harzkomponente mindestens eines umfasst, welches ausgewählt ist aus der Gruppe bestehend aus einem C5-C9-basierten Petrolharz, einem Terpen-basierten Harz und einem Kolophonium-basierten Harz.

**12.** Reifen nach einem der Ansprüche 1 bis 11,

wobei die Kautschukzusammensetzung einen Füllstoff umfasst,
wobei der Füllstoff Ruß und Siliziumdioxid umfasst, und
wobei ein Massenverhältnis des Siliziumdioxids zu dem Ruß mehr als 1,0 beträgt.

**13.** Reifen nach einem der Ansprüche 1 bis 12,

wobei eine Laufstreifenoberfläche des Laufstreifens umfasst:

eine oder mehrere Umfangsrillen, die sich durchgehend in einer Reifenumfangsrichtung erstrecken, und
durch die Umfangsrillen unterteilte Positivprofilteile,

wobei jeder der Positivprofilteile eine Querrille umfasst, die sich in einer Reifenbreitenrichtung erstreckt, und
wobei die Querrille einen Teil umfasst, dessen Rillenbreite auf einem zu einer Reifenradialrichtung senkrechten Querschnitt breiter ist als eine Rillenbreite auf der Laufstreifenoberfläche.

**14.** Reifen nach einem der Ansprüche 1 bis 13,

wobei eine Laufstreifenoberfläche des Laufstreifens umfasst:

eine oder mehrere Umfangsrillen, die sich durchgehend in einer Reifenumfangsrichtung erstrecken, und
durch die Umfangsrillen unterteilte Positivprofilteile, und

wobei ein Verhältnis einer Fläche der Umfangsrillen zu einer Fläche der Laufstreifen-Bodenberührungsoberfläche mehr als 19% und weniger als 32% beträgt.

**15.** Reifen nach einem der Ansprüche 1 bis 14,

wobei eine Laufstreifenoberfläche des Laufstreifens umfasst:

drei oder mehr Umfangsrillen, die sich durchgehend in einer Reifenumfangsrichtung erstrecken, und
durch die Umfangsrillen unterteilte Positivprofilteile,

wobei die Umfangsrillen bestehen aus:

einem Paar äußerer Umfangsrillen, die sich auf in der Reifenbreitenrichtung äußeren Seiten befinden, und
mindestens einer Zentrumsumfangsrille, die sich in der Reifenbreitenrichtung bezogen auf das Paar äußerer Umfangsrillen innerhalb befindet,

wobei die Positivprofilteile unterteilt sind in

Schulterpositivprofilteile, die sich in der Reifenbreitenrichtung bezogen auf das Paar äußerer Umfangsrillen außerhalb befinden, und
Zentrumspositivprofilteile, die sich in der Reifenbreitenrichtung bezogen auf die äußeren Umfangsrillen innerhalb befinden,

wobei jeder der Schulterpositivprofilteile eine Schulterquerrille umfasst, die sich in der Reifenbreitenrichtung erstreckt, und jeder der Zentrumspositivprofilteile eine Zentrumsquerrille umfasst, die sich in der Reifenbreitenrichtung erstreckt,
wobei ein Ende der Schulterquerrille zu einem Laufstreifen-Bodenberührungs-Ende offen ist, und das andere Ende der Schulterquerrille zu einer äußeren Umfangsrille offen ist,
wobei ein Ende der Zentrumsquerrille zu einer äußeren Umfangsrille offen ist, und das andere Ende der Zentrumsquerrille zur Zentrumsumfangsrille offen ist, und
wobei die Schulterquerrille und die Zentrumsquerrille eine Reihe von Querrillen bilden, die sich durchgehend vom Laufstreifen-Bodenberührungs-Ende zu einer Reifenäquatorebene hin erstreckt.

**Revendications**

**1.** Pneumatique comprenant une bande de roulement,

dans lequel la bande de roulement est composée d'une composition de caoutchouc comprenant un composant de caoutchouc,
dans lequel un rapport (G/WL) d'un poids de pneumatique G, en kg, à une capacité de charge maximum WL, en kg, du pneumatique est de 0,0150 ou moins, WL étant déterminé comme détaillé dans la description,
dans lequel, lorsqu'une valeur moyenne de coefficients de frottement statique, déterminés comme détaillé dans la description, de la composition de caoutchouc mesurée cinq fois à une pression de sol de 0,30 MPa et à une température de mesure de 25 °C sur une surface de route selon la norme ISO 15222 est rapportée comme $\mu$, G/WL et $\mu$ satisfont l'inégalité (1) suivante,

$$(G/WL)/\mu \leq 0{,}0214 \quad (1).$$

**2.** Pneumatique selon la revendication 1, dans lequel une valeur de G/WL est de 0,0140 ou moins.

**3.** Pneumatique selon la revendication 1 ou 2, dans lequel une valeur de $\mu$ est de 0,65 ou plus.

**4.** Pneumatique selon l'une quelconque des revendications 1 à 3, dans lequel une valeur du côté droit de l'inégalité (1) est de 0,0202.

**5.** Pneumatique selon l'une quelconque des revendications 1 à 4, dans lequel le composant de caoutchouc comprend un caoutchouc à base d'isoprène.

**6.** Pneumatique selon l'une quelconque des revendications 1 à 5, dans lequel la composition de caoutchouc comprend un composant de résine.

**7.** Pneumatique selon l'une quelconque des revendications 1 à 6, dans lequel une tangente de perte (tan $\delta$ à 30 °C) de la composition de caoutchouc mesurée sous une condition de température à 30 °C, une contrainte initiale de 5 %, une contrainte dynamique de 1 %, et une fréquence de 10 Hz est de plus de 0,17.

**8.** Pneumatique selon l'une quelconque des revendications 1 à 7, dans lequel un module élastique complexe (E* à 30 °C), en MPa, de la composition de caoutchouc mesuré sous une condition de température à 30 °C, une contrainte initiale de 5 %, une contrainte dynamique de 1 %, et une fréquence de 10 Hz est de moins de 9,5.

**9.** Pneumatique selon l'une quelconque des revendications 1 à 8, dans lequel un produit d'une tangente de perte (tan $\delta$ à 30 °C) de la composition de caoutchouc mesuré sous une condition de température à 30 °C, une contrainte initiale de 5 %, une contrainte dynamique de 1 %, et une fréquence de 10 Hz et une tangente de perte (tan $\delta$ à 0 °C) de la

composition de caoutchouc mesurée sous une condition de température à 0 °C, une contrainte initiale de 10 %, une contrainte dynamique de 2,5 %, et une fréquence de 10 Hz est de plus de 0,11.

**10.** Pneumatique selon l'une quelconque des revendications 1 à 9,

dans lequel la composition de caoutchouc comprend un composant de résine et
dans lequel une teneur du composant de résine sur la base de 100 parties en masse du composant de caoutchouc est de plus de 10 parties en masse.

**11.** Pneumatique selon l'une quelconque des revendications 1 à 10,

dans lequel la composition de caoutchouc comprend un composant de résine et
dans lequel le composant de résine comprend au moins une choisie dans le groupe constitué par une résine de pétrole à base de C5 à C9, une résine à base de terpène, et une résine à base de rosine.

**12.** Pneumatique selon l'une quelconque des revendications 1 à 11,

dans lequel la composition de caoutchouc comprend une charge,
dans lequel la charge comprend du noir de charbon et de la silice, et
dans lequel un rapport en masse de la silice au noir de charbon est de plus de 1,0.

**13.** Pneumatique selon l'une quelconque des revendications 1 à 12,

dans lequel une surface de bande de roulement de la bande de roulement comprend
un ou plusieurs sillons circonférentiels s'étendant en continu dans une direction circonférentielle de pneumatique et
des parties d'appui partitionnées par les sillons circonférentiels,
dans lequel chacune des parties d'appui comprend un sillon latéral s'étendant dans une direction de largeur de pneumatique et
dans lequel le sillon latéral comprend une partie dont la largeur de sillon sur une section transversale perpendiculaire à une direction radiale de pneumatique est plus large qu'une largeur de sillon sur la surface de bande de roulement.

**14.** Pneumatique selon l'une quelconque des revendications 1 à 13,

dans lequel une surface de bande de roulement de la bande de roulement comprend
un ou plusieurs sillons circonférentiels s'étendant en continu dans la direction circonférentielle et
des parties d'appui partitionnées par les sillons circonférentiels et
dans lequel un rapport d'une surface des sillons circonférentiels à une surface d'une surface de sol de bande de roulement est de plus de 19 % et de moins de 32 %.

**15.** Pneumatique selon l'une quelconque des revendications 1 à 14,

dans lequel une surface de bande de roulement de la bande de roulement comprend
trois ou plus sillons circonférentiels s'étendant en continu dans une direction circonférentielle de pneumatique et
des parties d'appui partitionnées par les sillons circonférentiels,
dans lequel les sillons circonférentiels sont constitués de
une paire de sillons circonférentiels les plus externes situés sur les côtés les plus externes dans la direction de largeur de pneumatique et
au moins un sillon circonférentiel central situé à l'intérieur de la direction de largeur de pneumatique par rapport à la paire de sillons circonférentiels les plus externes,
dans lequel les parties d'appui sont partitionnées en
des parties d'appui d'épaulement situées à l'extérieur de la direction de largeur de pneumatique par rapport aux sillons circonférentiels les plus externes et
des parties d'appui centrales situées à l'intérieur de la direction de largeur de pneumatique par rapport aux sillons circonférentiels les plus externes, dans lequel chacune des parties d'appui d'épaulement comprend un sillon latéral d'épaulement s'étendant dans la direction de largeur de pneumatique et chacune des parties d'appui centrales comprend un sillon latéral central s'étendant dans la direction de largeur de pneumatique,

dans lequel une extrémité du sillon latéral d'épaulement est ouverte à une extrémité de sol de pneumatique et l'autre extrémité du sillon latéral central est ouverte à un sillon circonférentiel central, et
dans lequel le sillon latéral d'épaulement et le sillon latéral central constituent une série de sillons latéraux s'étendant en continu de l'extrémité de sol de bande de roulement vers un plan équatorial de pneumatique.

FIG. 1

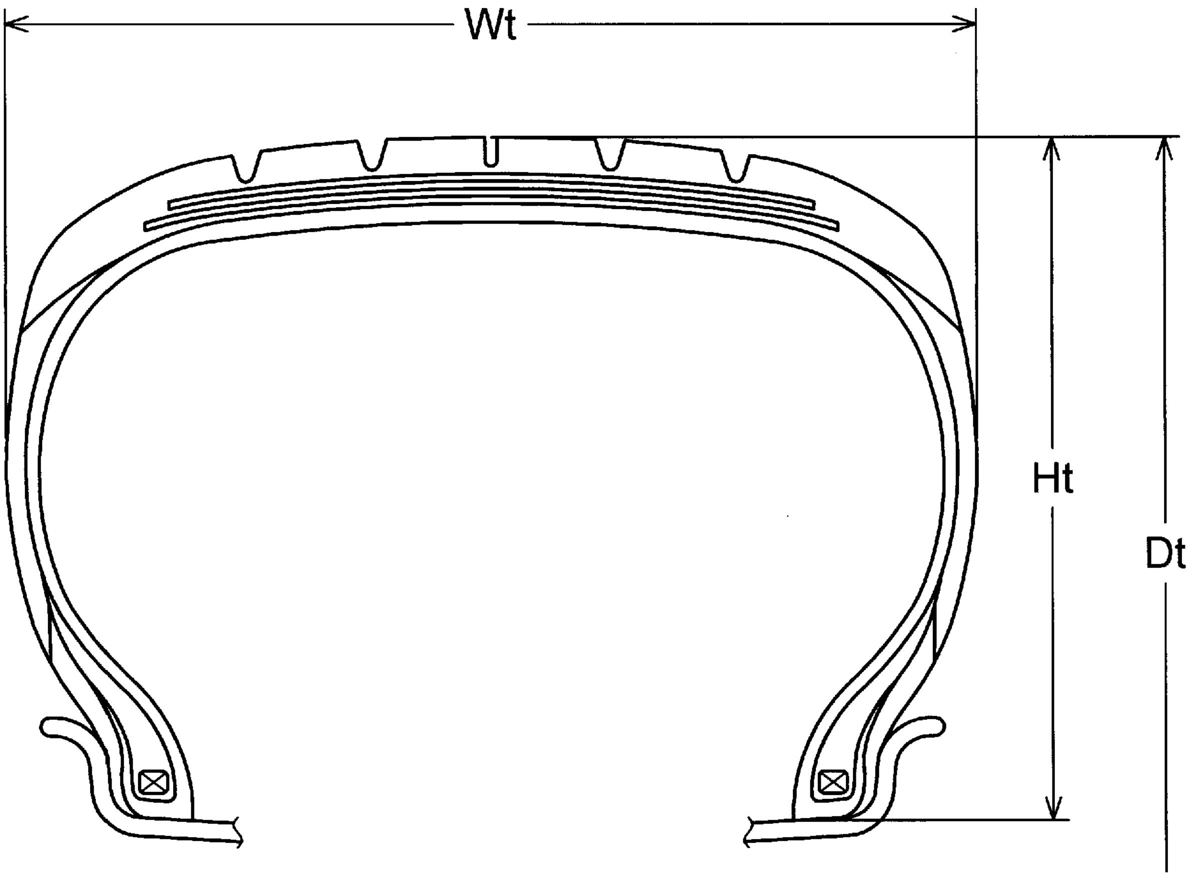

FIG. 2

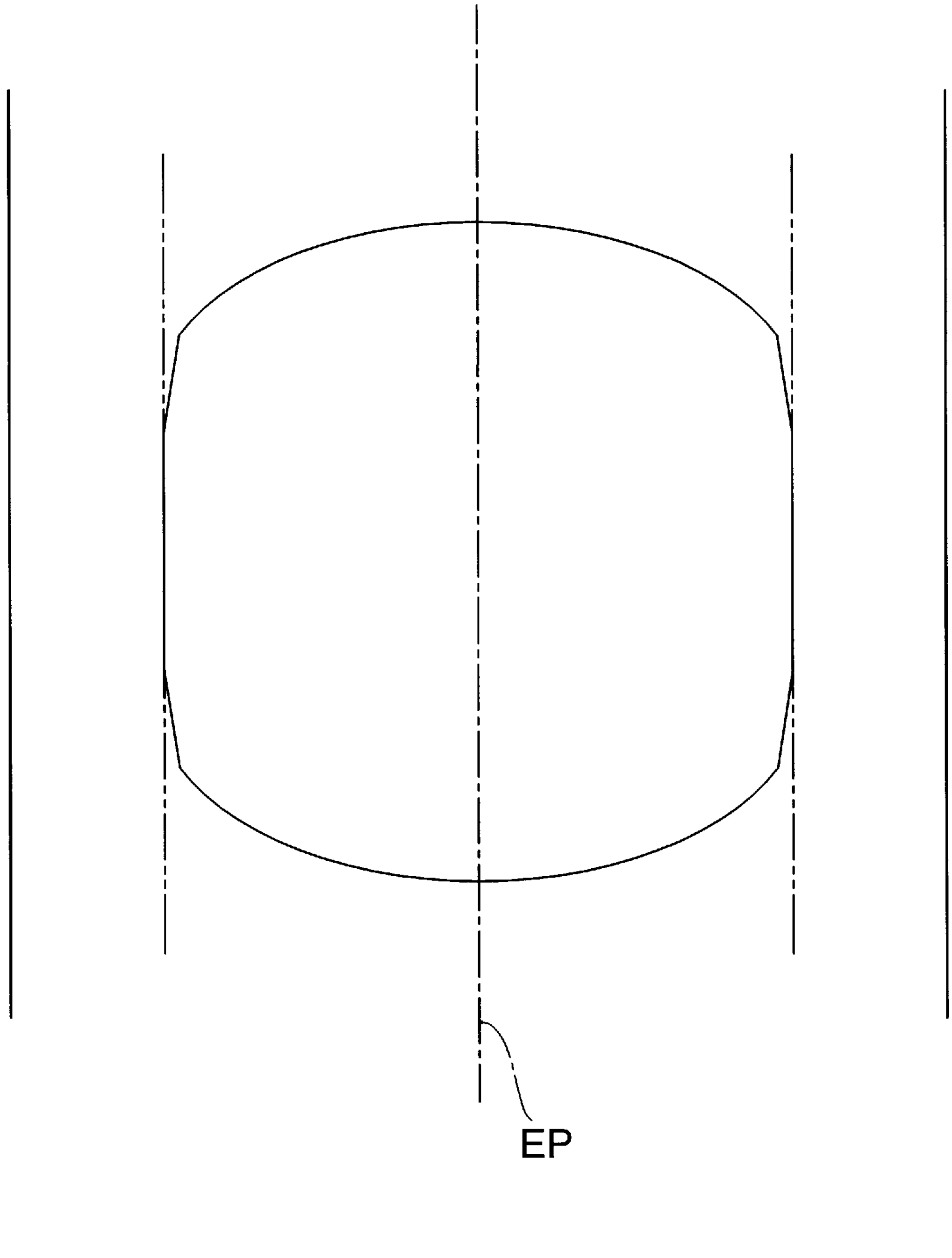

FIG. 3

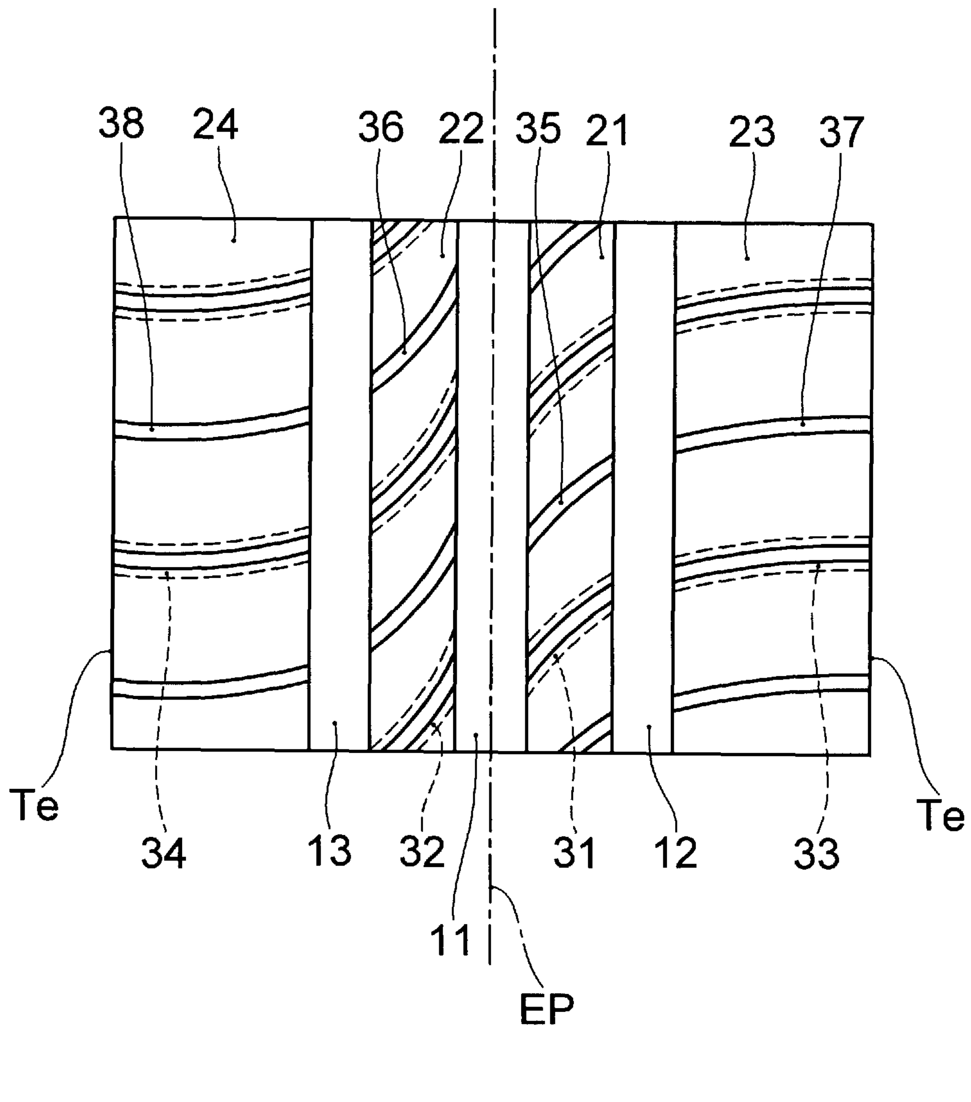

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008285524 A
- WO 2022224538 A1
- JP 2021172212 A
- EP 4067114 A1